# EUROPEAN PATENT SPECIFICATION

(11) **EP 4 146 727 B1**
(45) Date of publication and mention of the grant of the patent: **10.07.2024**
(21) Application number: 21721945.0
(22) Date of filing: 30.04.2021
(51) Int. Cl.: C08J 5/18, C08L 67/02, C08F 8/46, C08K 5/3492, C08K 5/523, C08K 5/5313, C08G 63/183

(54) **FLAME RETARDED POLYESTER BLEND**
FLAMMHEMMENDE POLYESTERMISCHUNG
MÉLANGE DE POLYESTER IGNIFUGÉ

(30) Priority: 06.05.2020 EP 20173327
(43) Date of publication of application: 15.03.2023
(73) Proprietor: BASF SE, 67056 Ludwigshafen am Rhein (DE)
(72) Inventor: ROTH, Michael, 67056 Ludwigshafen (DE); KLENZ, Rainer, 67056 Ludwigshafen (DE); MINGES, Christoph, 67056 Ludwigshafen (DE); USKE, Klaus, 67056 Ludwigshafen (DE); HEUSSLER, Michaela, 67056 Ludwigshafen (DE)
(74) Representative: BASF IP Association
(86) International application number: PCT/EP2021/061434
(87) International publication number: WO 2021/224136

(56) References cited:
- JP-A- 2016 151 014
- US-A1- 2006 025 508
- US-A1- 2013 310 494
- US-A1- 2018 298 189

## Description

The invention relates to thermoplastic molding compositions comprising a thermoplastic polyester, a poly(ε-caprolactone), a biodegradable polyester differing from the poly(ε-caprolactone), a phosphinic salt and a polar modified polyolefin wax prepared by means of metallocene catalysts, the use of the thermoplastic molding compositions for the production of flame-retardant moldings of any type, to the resultant moldings, and to the use of the polar modified polyolefin wax prepared by means of metallocene catalysts for an improvement of the flame retardancy of thermoplastic molding compositions comprising a thermoplastic polyester.

Thermoplastic polyesters are materials with a long history of use. Factors of increasing importance, alongside the mechanical, thermal, electrical and chemical properties of these materials, are properties such as flame retardancy and high glow-wire resistance. Examples here are applications in the household products sector (e.g. plugs) and in the electronics sector (e.g. protective covers for circuit breakers).

The market is moreover showing increasing interest in thermoplastic polyesters with a halogen-free flame retardancy system. The significant requirements placed upon the flame retardant here are pale intrinsic color, adequate thermal stability during polymer processing, and also effective flame retardancy in reinforced and unreinforced polymer.

The effectiveness of halogen-free flame retardant additive mixtures consisting of phosphinates and of nitrogen-containing synergists and, respectively, of reaction products of melamine with phosphoric acid (melamine polyphosphate) is in essence described via UL 94 V fire tests; see EP-A 142 3260, EP-A 108 4181.

DE-A-199 60 671 describes not only conventional flame retardants, for example phosphinic salts and melamine compounds, but also combinations with metal oxides, with metal hydroxides or with other salts.

The particular problem of those formulations is that their mechanical properties include brittleness, which often leads to premature fracture in use (tensile strain at break). Various approaches based on polymer mixtures have been described: use of commercially available impact modifiers (products marketed as Lotader^{®}, Paraloid^{®}, Metablen^{®}) leads to a significant improvement the mechanical properties but it then becomes impossible to realize flame-retardant products with low wall thicknesses. The reason is that said additives are highly combustible, being to a large extent based on ethylene or butadiene. Tough flame-retardant products are therefore often achieved via mixtures of PBT with various elastomers (US2008/0167406 and EP-A-2476730), but the same disadvantages arise here.

WO2006/018127 describes polyester mixtures which comprise not only flow improvers but also rubbers as impact modifiers. Mechanical properties can be improved in these mixtures, but addition of the rubbers in turn impairs rheological properties.

The commercially distributed flame-retardant ABS and PC additives resorcinol bisdiphenyl phosphate (RDP, CAS: 57583-54-7) and bisphenol-A diphenyl phosphate (BDP, CAS: 5945-33-5) exhibit disadvantages in terms of migration (see Polymer Degradation and Stability, 2002, 77(2), pp. 267-272).

WO 2017/063841 A1 describes thermoplastic polyester molding compositions which have a halogen-free flame retardancy system and which have good mechanical properties (tensile strain at break) and flame retardancy properties. Additionally, processing and the migration behavior of the additives during processing and in the desired applications (in particular for thin-walled parts) are improved.

US2006025508 A1 discloses a metallocene-catalyzed polyethylene wax grafted with 3% maleic anhydride, used in unreinforced and reinforced polybutylene terephthalate to improve the release properties, the internal lubricant action, the notched impact resistance and the dispersion of pigments.

However, further improvement of the flame retardancy properties and at the same time a good processability especially in extrusion is desired.

It was therefore an object of the present invention to provide polyester molding compositions which have a halogen-free flame retardancy system and which are especially characterized by good flame retardancy properties, in particular for thin-walled parts. Processing, especially in extrusion, should moreover be improved.

The following molding composition has accordingly been found.

A thermoplastic molding composition comprising
A) from 10 to 99.65% by weight of a thermoplastic polyester differing from C);
B) from 0.1 to 30% by weight of a poly(ε-caprolactone);
C) from 0.1 to 30% by weight of a biodegradable polyester differing from B);
D) from 0.1 to 30% by weight of a phosphinic salt;
E) from 0 to 20% by weight of a nitrogen-containing flame retardant;
F) from 0 to 15% by weight of an aromatic phosphate ester having at least one alkyl-substituted phenyl ring;
G) from 0.05 to 1 % by weight of a polyolefin wax prepared by means of metallocene catalysts, where the polyolefin wax is a homopolymer of ethylene, a copolymer of ethylene with one or more 1-olefins which may be linear or branched, substituted or unsubstituted and having 3-18 carbon atoms or a homopolymer of propylene, which is polar modified by reacting the polyolefin wax with an α,β-unsaturated carboxylic acid or a derivative thereof;
H) from 0 to 50% by weight of further additional substances,
where the sum of the percentages by weight of components A) to H) is 100%.

### Component G

The thermoplastic molding composition according to the present invention is especially characterized by the presence of component G in an amount from 0.05 to 1% by weight, preferably from 0.07 to 0.7% by weight, more preferably from 0.1 to 0.5% by weight, based on the total weight of the molding composition, of a polyolefin wax prepared by means of metallocene catalysts, where the polyolefin wax is a homopolymer of ethylene, a copolymer of ethylene with one or more 1-olefins which may be linear or branched, substituted or unsubstituted and having 3-18 carbon atoms or a homopolymer of propylene, which is polar modified by reacting the polyolefin wax with an α,β-unsaturated carboxylic acid or a derivative thereof.

Whereas processing aids, like long-chain fatty acids, e.g. montan waxes (mixtures of straight-chain, saturated carboxylic acids having chain lengths of from 28 to 32 carbon atoms), generally have a negative impact on the fire behavior, it has been found by the inventors of the present invention that polar modified polyolefin waxes prepared by means of metallocene catalysts have a positive impact on the fire behavior, especially for thin-walled parts. Further, the processing especially in extrusion, is improved, i.e. no or reduced deposits of additives during processing, especially no or reduced die drool.

The 1-olefins may be linear or branched, substituted or unsubstituted and have 3 to 18 carbon atoms, preferably have 3 to 6 carbon atoms. Examples are propene, 1-butene, 1-hexene, 1-octene and 1-octadecene, also styrene. Preference is given to copolymers of ethylene with propene or 1-butene. The copolymers have an ethylene content of 70-99.9% by weight, preferably 80-99% by weight. If the 1-olefins are substituted, the substituent is preferably an aromatic radical which is conjugated with the double bond of the 1-olefin.

Particularly suitable polyolefin waxes used as starting materials, i.e. which are not polar modified, are homopolymers of ethylene or a copolymers of ethylene with one or more 1-olefins preferably having a drop point in the range from 90 to 130°C, more preferably from 100 to 120°C, a melt viscosity at 140°C preferably in the range from 10 to 10,000 mPa.s, more preferably from 50 to 5000 mPa.s and a density at 20°C preferably in the range from 0.89 to 1.05 g/cm³, more preferably from 0.91 to 0.99 g/cm³. In the case of copolymers of ethylene with one or more 1-olefins as comonomer, the comonomer units can be distributed either predominantly randomly or predominantly in blocks. In the case that the 1-olefin is propylene, the propylene sequences may be isotactic, syndiotactic or partially atactic.

Further suitable polyolefin waxes used as starting materials, i.e. which are not polar modified, are propylene homopolymers prepared using metallocene catalysts and preferably having melt viscosities, measured at 170°C, of from 20 to 50,000 mPa.s. The softening points (ring/ball) of such waxes are generally from 90 to 165°C, preferably from 90 to 145°C. Suitable waxes are both highly crystalline products having a high proportion of isotactic or syndiotactic structures and those having a low crystallinity and a predominantly atactic structure. The degree of crystallinity of propylene homopolymers can be varied within wide limits in a known manner by appropriate selection of the catalyst used for the polymerization and by means of the polymerization conditions.

The synthesis of the unmodified, i.e. nonpolar, starting waxes by means of catalysts of the metallocene type is known from numerous documents, for example from EP-A-0 571 882 and EP-A-0 416 566.

Metallocene catalysts for preparing said starting polyolefin waxes are chiral or nonchiral transition metal compounds of the formula M¹Lₓ. The transition metal compound M¹Lₓ contains at least one central metal atom M¹ to which at least one π ligand, e.g. a cyclopentadienyl ligand, is bound. In addition, substituents, such as halogen atoms or alkyl, alkoxy or aryl groups, may be bound to the central metal atom M¹. M¹ is preferably an element of main group III, IV, V or VI of the Periodic Table of the Elements, e.g. Ti, Zr or Hf. For the purposes of the present invention, cyclopentadienyl ligands are unsubstituted cyclopentadienyl radicals and substituted cyclopentadienyl radicals, such as methylcyclopentadienyl, indenyl, 2-methylindenyl, 2-methyl-4-phenyl-indenyl, tetrahydroindenyl, or octahydrofluorenyl radicals. The π ligands can be bridged or un-bridged, with single and multiple bridges, including bridges via ring systems, being possible. The term metallocene also encompasses compounds having more than one metallocene fragment, known as multinuclear metallocenes. These can have any substitution patterns and forms of bridging. The individual metallocene fragments of such multinuclear metallocenes can be either of the same type or different from one another. Examples of such multinuclear metallocenes are described, for example, in EP-A-0 632 063.

Examples of structural formulae of metallocenes and of their activation by means of a cocatalyst are given, inter alia, in EP-A-0 571 882 and EP-A-0 416 566.

The polyolefin wax is polar modified by reacting the polyolefin wax with an α,β-unsaturated carboxylic acid or a derivative thereof, preferably in the presence of free-radical formers.

Examples for suitable α,β-unsaturated carboxylic acids or their derivatives are acrylic acid or methacrylic acid or their esters or amides, maleic acid, maleic anhydride, monoesters of maleic acid, e.g. monoalkyl maleates, diesters of maleic acid, e.g. dialkyl maleates, or amides of maleic acid, e.g. maleimide or N-alkyl-substituted maleimides. It is also possible to use mixtures of these compounds. Preference is given to maleic acid and its derivatives; particular preference is given to maleic anhydride. The α,β-unsaturated carboxylic acid or its derivative is used in an amount, based on the starting polyolefin wax, of 0.1 to 20% by weight.

Suitable free-radical formers are compounds which disintegrate into free radicals to a sufficient extent under the reaction conditions. Particularly suitable free-radical formers are organic peroxides, for example alkyl, aryl or aralkyl peroxides such as di-tert-butyl peroxide or dicumyl peroxide, peroxyesters such as tert-butyl peracetate or tert-butyl perbenzoate or hydroperoxides such as tert-butyl hydroperoxide or cumene hydroperoxide. Further possible free-radical formers are aliphatic azo compounds such as azobis(2-methylpropionitrile) or 2,2'-azobis-(2,4-dimethylvaleronitrile). Preference is given to dialkyl peroxides, particularly preferably di-tert-butyl peroxide. The free-radical former is used in a concentration, based on the starting polyolefin wax, of 0.1 to 5% by weight.

The reaction of the starting polyolefin wax, with the α,β-unsaturated carboxylic acid or its derivative can be carried out either continuously or batchwise. In the batchwise procedure, the wax is heated to a temperature above its softening point and both the α,β-unsaturated carboxylic acid or its derivative and the free-radical former are introduced into the melt while stirring, either continuously over an appropriate period of time or in one or more portions, if desired under a blanket of inert gas. The reaction temperature is above the softening point of the wax, preferably from 100 to 200°C, particularly preferably from 130 to 180°C. After metering-in is complete, the mixture can be left to react further at the same temperature or a different temperature, if desired after addition of a further amount of free-radical former. Volatile components formed during the reaction or excess volatile starting components can, for example, be distilled off under reduced pressure or be removed by stripping with inert gas.

The polar waxes, i.e. component G of the present invention, preferably have an acid or saponification number of from 0.5 to 120 mg KOH/g, more preferably from 1 to 100 mg KOH/g, most preferably 5 to 80 mg KOH/g, a preferred melt viscosity of 20 to 50,000 mPa.s, more preferably 25 to 5,000 mPa.s, most preferably 30 to 500 mPa.s, and a preferred softening point (ring/ball) of 90 to 165°C, preferably 90 to 145°C.

Preferably, component G) is a homopolymer of ethylene or a copolymer of ethylene with one or more 1-olefins which may be linear or branched, substituted or unsubstituted and having 3 to 18 carbon atoms, which is polar modified by reacting the polyolefin wax with maleic anhydride. More preferably a homopolymer of ethylene, which is polar modified by reacting the polyolefin wax with maleic anhydride.

Products of this type are obtainable commercially by way of example from Clariant Plastics & Coatings (Deutschland) GmbH as Licocene^{®} PE MA 4221 fine grain.

### Component A

The molding compositions of the invention comprise, as component (A), from 10 to 99.65% by weight, preferably from 20 to 92.83% by weight and in particular from 35 to 86.8% by weight, based on the total weight of the molding composition, of at least one thermoplastic polyester differing from B) or C).

Use is generally made of polyesters A) based on aromatic dicarboxylic acids and on aliphatic and/or aromatic dihydroxy compounds.

Polyesters based on aromatic dicarboxylic acids and aliphatic dihydroxy compounds are preferred, in particular those aliphatic dihydroxy compounds having from 2 to 10 carbon atoms are a first group of preferred polyesters.

These polyesters based on aromatic dicarboxylic acids and aliphatic dihydroxy compounds are known per se and are described in the literature. They comprise, in the main chain, an aromatic ring that derives from the aromatic dicarboxylic acid. The aromatic ring can also have substitution, e.g. by halogen such as chlorine and bromine, or by C₁-C₄-alkyl groups such as methyl, ethyl, isopropyl, n-propyl, and n-butyl, isobutyl and tert-butyl groups.

These polyesters based on aromatic dicarboxylic acids and aliphatic dihydroxy compounds can be produced by reaction of aromatic dicarboxylic acids, or their esters or other ester-forming derivatives, with aliphatic dihydroxy compounds (in a manner known per se).

Preferred dicarboxylic acids that may be mentioned are 2,6-naphthalenedicarboxylic acid, terephthalic acid and isophthalic acid and mixtures thereof. Up to 30 mol%, preferably not more than 10 mol %, of the aromatic dicarboxylic acids can be replaced by aliphatic or cycloaliphatic dicarboxylic acids such as adipic acid, azelaic acid, sebacic acid, dodecanedioic acids and cyclohexanedicarboxylic acids. More preferred is terephthalic acid as dicarboxylic acid, i.e. more preferred polyesters A) are polyalkylene terephthalates.

Among the aliphatic dihydroxy compounds, preference is given to diols having from 2 to 6 carbon atoms, in particular 1,2-ethanediol, 1,3-propanediol, 1,4-butanediol, 1,6-hexanediol, 1,4-hexanediol, 1,4-cyclohexanediol, 1,4-cyclohexanedimethanol and neopentyl glycol and mixtures of these.

Particularly preferred polyesters (A) that may be mentioned are polyalkylene terephthalates that derive from alkanediols having from 2 to 6 carbon atoms. Among these, preference is in particular given to polyethylene terephthalate, polypropylene terephthalate and polybutylene terephthalate and mixtures of these. Preference is further given to PET and/or PBT which comprise up to 1 % by weight, preferably up to 0.75% by weight, of 1 ,6-hexanediol and/or 2-methyl-1 ,5-pentanediol as further monomer units.

The intrinsic viscosity of the polyesters (A) is generally in the range from 50 to 220, preferably from 80 to 160 (measured in 0.5% by weight solution in a phenol/o-dichlorobenzene mixture (ratio by weight 1:1 at 25°C) in accordance with ISO 1628).

Preference is in particular given to polyesters having carboxy end group content of up to 100 meq/kg of polyester, preferably up to 50 meq/kg and in particular up to 40 meq/kg. These polyesters can by way of example be produced by the process of DE-A 44 01 055. Carboxy end group content is usually determined by titration methods (e.g. potentiometry).

It is moreover advantageous to use PET recyclates (also known as scrap PET), optionally in a mixture with polyalkylene terephthalates such as PBT.

The term recyclates generally means:
1) Those known as post-industrial recylates: these are the production wastes during polycondensation or during processing, e.g. sprues from injection molding, start-up material from injection molding or extrusion, or edge trims from extruded sheets or films.
2) Post-consumer recyclates: these are plastics items which are collected and treated after utilization by the end consumer. Blow-molded PET bottles for mineral water, soft drinks and juices are easily the predominant items in terms of quantity.

Both types of recyclate may be used either as regrind or in the form of pellets. In the latter case, the crude recycled materials are isolated and purified and then melted and pelletized using an extruder. This usually facilitates handling and free-flowing properties, and metering for further steps in processing.

The edge length should not be more than 10 mm and should preferably be less than 8 mm.

Because polyesters undergo hydrolytic cleavage during processing (due to traces of moisture) it is advisable to predry the recycled material. Residual moisture content after drying is preferably <0.2%, in particular <0.05%.

Another group to be mentioned is that of fully aromatic polyesters deriving from aromatic dicarboxylic acids and aromatic dihydroxy compounds.

Suitable aromatic dicarboxylic acids are the compounds previously described for the polyesters based on aromatic dicarboxylic acids and aliphatic dihydroxy compounds. Preference is given to use of mixtures of from 5 to 100 mol % of isophthalic acid and from 0 to 95 mol % of terephthalic acid, in particular to mixtures of about 80% to 50% of terephthalic acid with from 20% to 50% of isophthalic acid.

The aromatic dihydroxy compounds preferably have the general formula 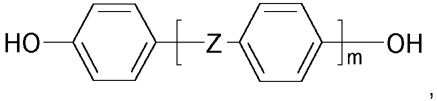 in which Z is an alkylene or cycloalkylene group having up to 8 carbon atoms, an arylene group having up to 12 carbon atoms, a carbonyl group, a sulfonyl group, an oxygen atom or sulfur atom, or a chemical bond, and in which m has the value from 0 to 2. The phenylene groups in the compounds may also have substitution by C₁-C₆-alkyl groups or alkoxy groups, and fluorine, chlorine, or bromine.

Examples of parent compounds for these compounds are
- dihydroxybiphenyl,
- di(hydroxyphenyl)alkane,
- di(hydroxyphenyl)cycloalkane,
- di(hydroxyphenyl) sulfide,
- di(hydroxyphenyl) ether,
- di(hydroxyphenyl) ketone,
- di(hydroxyphenyl) sulfoxide,
- α,α'-di(hydroxyphenyl)dialkylbenzene,
- di(hydroxyphenyl)sulfone,
- di(hydroxybenzoyl)benzene,
- resorcinol, and hydroquinone,
- and also the ring-alkylated and ring-halogenated derivatives of these.

Among these, preference is given to
- 4,4'-dihydroxybiphenyl,
- 2,4-di(4'-hydroxyphenyl)-2-methylbutane,
- α,α'-di(4-hydroxyphenyl)-p-diisopropylbenzene,
- 2,2-di(3'-methyl-4'-hydroxyphenyl)propane, and
- 2,2-di(3'-chloro-4'-hydroxyphenyl)propane,
   and in particular to
- 2,2-di(4'-hydroxyphenyl)propane,
- 2,2-di(3',5-dichlorodihydroxyphenyl)propane,
- 1,1 -di(4'-hydroxyphenyl)cyclohexane,
- 3,4'-dihydroxybenzophenone,
- 4,4'-dihydroxydiphenyl sulfone and
- 2,2-di(3',5'-dimethyl-4'-hydroxyphenyl)propane
or a mixture of these.

It is, of course, also possible to use mixtures of polyesters based on aromatic dicarboxylic acids and aliphatic dihydroxy compounds and fully aromatic polyesters. These generally comprise from 20 to 98% by weight of the polyalkylene terephthalate and from 2 to 80% by weight of the fully aromatic polyester.

It is, of course, also possible to use polyester block copolymers, such as copolyetheresters.

Products of this type are known per se and are described in the literature, e.g. in U.S. Pat. No. 3,651,014. Corresponding products are also available commercially, e.g. Hytrel^{®} (DuPont).

Halogen free polycarbonates are also polyesters in the invention. Examples of suitable halogen-free polycarbonates are those based on biphenols of the general formula 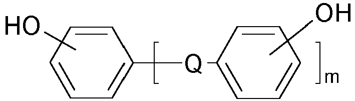 in which Q is a single bond, a C₁-C₈-alkylene group, a C₂-C₃-alkylidene group, a C₃-C₆-cycloalkylidene group, a C₆-C₁₂-arylene group, or else -O-, -S- or -SO₂ -, and m is an integer from 0 to 2.

The phenylene radicals of the biphenols may also have substituents, such as C₁-C₆-alkyl or C₁-C₆-alkoxy.

Examples of preferred biphenols of the formula are hydroquinone, resorcinol, 4,4'-dihydroxybiphenyl, 2,2-bis(4-hydroxyphenyl)propane, 2,4-bis(4-hydroxyphenyl)-2-methylbutane and 1,1-bis(4-hydroxyphenyl)cyclohexane. Particular preference is given to 2,2-bis(4-hydroxyphenyl)propane and 1,1-bis(4-hydroxyphenyl)cyclohexane, and also to 1,1-bis(4-hydroxyphenyl)-3,3,5-trimethylcyclohexane.

Either homopolycarbonates or copolycarbonates are also suitable as component A), and preference is given to the copolycarbonates of bisphenol A, as well as to bisphenol A homopolymer.

Suitable polycarbonates may be branched in a known manner, specifically and preferably by incorporating from 0.05 to 2.0 mol%, based on the total of the biphenols used, of at least trifunctional compounds, for example those having three or more phenolic OH groups.

Polycarbonates which have proven particularly suitable have relative viscosities ηᵣₑₗ n of from 1.10 to 1.50, in particular from 1.25 to 1.40. This corresponds to average molar masses M_{w} (weight average) of from 10000 to 200000 g/mol, preferably from 20000 to 80000 g/mol. The biphenols of the general formula are known per se or can be produced by known processes.

The polycarbonates may, for example, be produced by reacting the biphenols with phosgene in the interfacial process, or with phosgene in the homogeneous-phase process (known as the pyridine process), and in each case the desired molecular weight is achieved in a known manner by using an appropriate amount of known chain terminators. (in relation to polydiorganosiloxane-containing polycarbonates see, for example, DE-A 33 34 782.)

Examples of suitable chain terminators are phenol, p-tert-butylphenol, or else long-chain alkylphenols, such as 4-(1,3-tetramethylbutyl)phenol, as in DE-A 28 42 005, or monoalkylphenols, or dialkylphenols with a total of from 8 to 20 carbon atoms in the alkyl substituents, as in DE-A 35 06 472, such as p-nonylphenyl, 3,5-di-tert-butylphenol, p-tert-octylphenol, p-dodecylphenol, 2-(3,5-dimethylheptyl)phenol and 4-(3,5-dimethylheptyl)phenol.

For the purposes of the present invention, the expression halogen-free polycarbonates means polycarbonates made from halogen-free biphenols, from halogen-free chain terminators and optionally from halogen-free branching agents, where the content of subordinate amounts at the ppm level of hydrolysable chlorine, resulting, for example, from the production of the polycarbonates with phosgene in the interfacial process, is not regarded as meriting the term halogen-containing for the purposes of the invention. Polycarbonates of this type with contents of hydrolysable chlorine at the ppm level are halogen-free polycarbonates for the purposes of the present invention.

Other suitable components A) that may be mentioned are amorphous polyester carbonates, where phosgene has been replaced during a production process by aromatic dicarboxylic acid units such as isophthalic acid and/or terephthalic acid units. Reference may be made at this point to EP-A 711 810 for further details.

Other suitable copolycarbonates having cycloalkyl moieties as monomer units are described in EP-A 365 916.

Bisphenol A can moreover be replaced by bisphenol TMC. Polycarbonates of this type are obtainable commercially from Covestro (APEC HT^{®}).

### Component B

The molding compositions of the invention comprise, as component B), from 0.1 to 30% by weight, preferably from 0.5 to 15% by weight, in particular from 1 to 10% by weight and very particularly preferably from 1 to 5% by weight, based on the total weight of the molding composition, of a poly ε-caprolactone.

Polyesters of this type exhibit the following structure: 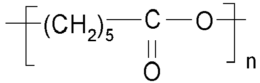 in which n is 200 to 600.

They are usually produced by ring-opening polymerization of ε-caprolactone.

These polymers are semicrystalline, and are classified as biodegradable polyesters.

According to ROMPP Online Encyclopedia, these are polymers which are degraded in the presence of microorganisms in a biologically active environment (compost, etc.). (in contrast to oxo-degradable polyesters and UV-initiated polyester degradation.)

The average molar mass M_{w} of preferred components B) is from 5000 to 200 000 g/mol, in particular from 50 000 to 140 000 g/mol (determined by means of GPC with hexafluoroisopropanol and 0.05% of potassium trifluoroacetate as solvent, using PMMA as standard).

Melting range (DSC, 20 K/min in accordance with DIN 11357) is generally from 80 to 150, preferably from 100 to 130° C.

Products of this type are obtainable commercially by way of example from Ingevity Corp. as Capa^{®}.

### Component C

The molding compositions of the invention comprise, as component C), from 0.1 to 30% by weight, preferably from 0.5 to 15% by weight, in particular from 1 to 10% by weight and very particularly preferably from 1 to 5% by weight, based on the total weight of the molding composition, of a biodegradable polyester differing from B) and A).

The above is preferably intended to mean aliphatic-aromatic polyesters.

The expression aliphatic-aromatic polyesters C) means linear, chain-extended, and preferably branched and chain-extended, polyesters, as described by way of example in WO 96/15173 to 15176 or in WO 98/12242.

Mixtures of various semi aromatic polyesters can equally be used. More recent developments that are of interest are based on renewable raw materials (see WO2010/034689). In particular, the expression polyesters C) means products such as Ecoflex^{®} (BASF SE).

Among the preferred polyesters C) are polyesters comprising as significant components:
C1) from 30 to 70 mol%, preferably from 40 to 60 mol%, with a particular preference from 50 to 60 mol%, based on components C1) to C2), of an aliphatic dicarboxylic acid or mixture thereof, preferably as in the following list: adipic acid, azelaic acid, sebacic acid and brassylic acid,
C2) from 30 to 70 mol%, preferably from 40 to 60 mol%, with a particular preference from 50 to 60 mol%, based on components C1) to C2), of an aromatic dicarboxylic acid or mixture thereof, preferably as follows: terephthalic acid,
C3) from 98.5 to 100 mol%, based on components C1) to C2), of 1,4-butanediol and 1,3-propanediol;
C4) from 0.05 to 1.5 mol%, preferably from 0.1 to 0.2 mol%, based on components C1) to C3), of a chain extender, in particular a di- or polyfunctional isocyanate, preferably hexamethylene diisocyanate, and optionally a branching agent, preferably: trimethylolpropane, pentaerythritol and in particular glycerol.

Aliphatic diacids and the corresponding derivatives C1) that can preferably be used are those having from 6 to 20 carbon atoms, preferably from 6 to 10 carbon atoms. They can be either linear or branched. In principle, however, it is also possible to use dicarboxylic acids having a larger number of carbon atoms, for example having up to 30 carbon atoms.

The following may be mentioned by way of example: 2-methylglutaric acid, 3-methylglutaric acid, α-ketoglutaric acid, adipic acid, pimelic acid, azelaic acid, sebacic acid, brassylic acid, suberic acid, and itaconic acid. It is possible here to use the dicarboxylic acids or ester-forming derivatives of these, individually or as mixture of two or more thereof.

It is preferable to use adipic acid, azelaic acid, sebacic acid, brassylic acid or respective ester-forming derivatives thereof or a mixture thereof. It is particularly preferably to use adipic acid or sebacic acid or respective ester-forming derivatives thereof or mixtures thereof.

Preference is in particular given to the following aliphatic-aromatic polyesters: polybutylene adipate terephthalate (PBAT), polybutylene sebacate terephthalate (PBSeT).

The aromatic dicarboxylic acids or ester-forming derivatives thereof C2) can preferably be used individually or in the form of mixture of two or more thereof. Particular preference is given to the use of terephthalic acid or ester-forming derivatives thereof, for example dimethyl terephthalate.

The diols C3) - 1,4-butanediol and 1,3-propanediol - are obtainable in the form of renewable raw material. It is also possible to use mixtures of the diols mentioned.

Use is generally made of from 0.05 to 1.5% by weight, preferably from 0.1 to 1.0% by weight and with particular preference from 0.1 to 0.3% by weight, based on the total weight of the polyester C), of a branching agent, and/or of from 0.05 to 1 % by weight, preferably from 0.1 to 1.0% by weight, based on the total weight of the polyester C), of a chain extender C4), selected from the group consisting of: a polyfunctional isocyanate, isocyanurate, oxazoline, carboxylic anhydride such as maleic anhydride, epoxide (in particular an epoxide-containing poly(meth)acry-late), an at least trihydric alcohol or an at least tribasic carboxylic acid. Compounds that can be used as chain extenders C4) are polyfunctional and in particular difunctional isocyanates, isocyanurates, oxazolines or epoxides.

Other compounds that can be regarded as branching agents are chain extenders, and also alcohols or carboxylic acid derivatives, having at least three functional groups. Particularly preferred compounds have from three to six functional groups. The following may be mentioned by way of example: tartaric acid, citric acid, malic acid, trimesic acid, trimellitic acid, trimellitic anhydride, pyromellitic acid and pyromellitic dianhydride; trimethylolpropane, trimethylolethane; pentaerythritol, polyethertriols and glycerol. Preference is given to polyols such as trimethylolpropane, pentaerythritol and in particular glycerol. By means of components C4) it is possible to construct biodegradable polyesters that have pseudoplastic properties. The rheology of the melts improves; easier processing of the biodegradable polyesters becomes possible.

It is generally advisable to add the branching (at least trifunctional) compounds at a relatively early juncture in the polymerization procedure.

Examples of suitable bifunctional chain extenders are tolylene 2,4-diisocyanate, tolylene 2,6-diisocyanate, diphenylmethane 2,2'-diisocyanate, diphenylmethane 2,4'-diisocyanate, diphenylmethane 4,4'-diisocyanate, naphthylene 1,5-diisocyanate, xylylene diisocyanate, hexamethylene 1,6-diisocyanate, isophorone diisocyanate and methylene bis(4-isocyanatocyclohexane). Particular preference is given to isophorone diisocyanate and in particular to hexamethylene 1,6-diisocyanate.

The number-average molar mass (Mₙ) of the polyesters C) is generally in the range from 5000 to 100 000 g/mol, in particular in the range from 10000 to 75 000 g/mol, preferably in the range from 15 000 to 38 000 g/mol, while their weight-average molar mass (M_{w}) is generally from 30 000 to 300 000 g/mol, preferably from 60 000 to 200 000 g/mol, and their M_{w}/Mₙ ratio is form 1 to 6, preferably from 2 to 4. Intrinsic viscosity is preferably from 50 to 450, preferably from 80 to 250 g/ml (measured in accordance with ISO307 in o-dichlorobenzene/phenol (ratio by weight 50/50). Melting point is in the range from 85 to 150°C, preferably in the range from 95 to 140°C.

MVR (melt volume rate) in accordance with EN ISO 1133-1 DE (190°C, 2.16 kg weight) is generally from 0.5 to 8 cm³/10 min, preferably from 0.8 to 6 cm³/10 min. Acid numbers in accordance with DIN EN 12634 are generally from 0.01 to 1.2 mg KOH/g, preferably from 0.01 to 1.0 mg KOH/g and with particular preference from 0.01 to 0.7 mg KOH/g.

### Component D

The molding compositions of the invention comprise, as component D), from 0.1 to 30% by weight, preferably from 5 to 25% by weight and in particular from 10 to 25% by weight, based on the total weight of the molding composition, of a phosphinic salt.

Preference is given to phosphinic salts of the formula (I) or/and diphosphinic salts of the formula (II) or polymers of these: 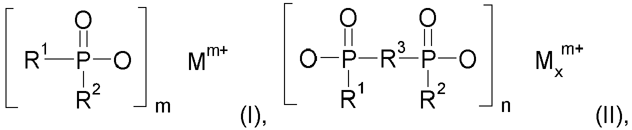 in which
R¹ and R², being identical or different, are hydrogen, or, in linear or branched form, C₁-C₆-alkyl, and/or aryl, or 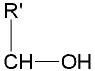
R' is hydrogen, phenyl, tolyl;
R³ is, in linear or branched form, C₁-C₁₀-alkylene or C₆-C₁₀-arylene, -alkylarylene or -arylalkylene;
M is Mg, Ca, Al, Sb, Sn, Ge, Ti, Zn, Fe, Zr, Ce, Bi, Sr, Mn, Li, Na, K and/or protonated nitrogen base;
m is from 1 to 4; n is from 1 to 4; x is from 1 to 4.

It is preferable that R¹ and R² of component D), being identical or different, are hydrogen, methyl, ethyl, n-propyl, isopropyl, n-butyl, tert-butyl, n-pentyl and/or phenyl.

It is preferable that R³ of component D is methylene, ethylene, n-propylene, isopropylene, n-butylene, tert-butylene, n-pentylene, n-octylene or n-dodecylene, phenylene or naphthylene; methylphenylene, ethylphenylene, tert-butylphenylene, methylnaphthylene, ethylnaphthylene or tert-butylnaphthylene; phenylmethylene, phenylethylene, phenylpropylene or phenylbutylene.

It is particularly preferable that R¹ and R² are hydrogen, methyl, ethyl and that M=Mg, Ca, Zn, Al, particular preference being given here to Al hypophosphite and to Al diethylphosphinate.

The phosphinates are preferably produced by precipitation of the corresponding metal salts from aqueous solutions. The phosphinates can also, however, be precipitated in the presence of a suitable inorganic metal oxide or metal sulfide as support material (white pigments, for example TiO₂, SnO₂, ZnO, ZnS, SiO₂). This gives surface-modified pigments which can be used as laser-markable flame retardants for thermoplastic polyesters.

### Component E

The molding compositions of the invention can comprise, as component E), from 0 to 20% by weight, preferably from 1 to 20% by weight and in particular from 1 to 15% by weight, based on the total weight of the molding composition, of a nitrogen-containing flame retardant, preferably a melamine compound, more preferably melamine cyanurate.

The melamine cyanurate that is preferably suitable in the invention (component E) is a reaction product of preferably equimolar quantities of melamine (formula I) and cyanuric acid or isocyanuric acid (formulae la and Ib)

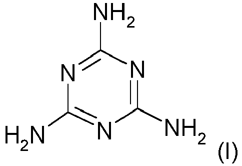

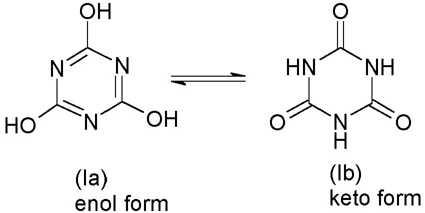

It is obtained by way of example via reaction of aqueous solutions of the starting compounds at from 90 to 100°C. The commercially available product is a white powder of average d₅₀ grain size from 1.5 to 7 µm having a d₉₉ value smaller than 50 µm.

Other suitable compounds (often also termed salts or adducts) are melamine sulfate, melamine, melamine borate, melamine oxalate, melamine phosphate prim., melamine phosphate sec. and melamine pyrophosphate sec., melamine neopentyl glycol borate, and also polymeric melamine phosphate (e.g. CAS No. 56386-64-2 or 218768-84-4).

Preference is given to melamine polyphosphate salts derived from a 1,3,5-triazine compound of which the number n representing the average degree of condensation is from 20 to 200, and the 1,3,5-triazine content per mole of phosphorus atom is from 1.1 to 2.0 mol of a 1,3,5-triazine compound selected from the group consisting of melamine, melam, melem, melon, ammeline, ammelide, 2-ureidomelamine, acetoguanamine, benzoguanamine, and diaminophenyltriazine. It is preferable that the n value of these salts is generally from 40 to 150, and that the molar ratio of a 1,3,5-triazine compound to phosphorus atom is from 1.2 to 1.8. The pH of a 10% by weight aqueous slurry of salts produced as in EP-A 1 095 030 is moreover generally more than 4.5 and preferably at least 5.0. The pH is usually determined by placing 25 g of the salt and 225 g of pure water at 25°C in a 300 ml beaker, stirring the resultant aqueous slurry for 30 minutes, and then measuring the pH. The abovementioned n value, the number-average degree of condensation, can be determined by means of ³¹P solid-state NMR. J. R. van Wazer, C. F. Callis, J. Shoolery and R. Jones, J. Am. Chem. Soc., 78, 5715, 1956, disclose that the number of adjacent phosphate groups is given by a unique chemical shift which permits clear distinction between orthophosphates, pyrophosphates, and polyphosphates. EP 1 095 030 A moreover describes a process for producing the desired polyphosphate salt of a 1,3,5-triazine compound which has an n value of from 20 to 200, where the 1,3,5-triazine content of said 1,3,5-triazine compound is from 1.1 to 2.0 mol of a 1,3,5-triazine compound. Said process comprises conversion of a 1,3,5-triazine compound into its orthophosphate salt by orthophosphoric acid, followed by dehydration and heat treatment in order to convert the orthophosphate salt into a polyphosphate of the 1,3,5-triazine compound. Said heat treatment is preferably carried out at a temperature of at least 300°C, and preferably at least 310°C. In addition to orthophosphates of 1,3,5-triazine compounds, it is equally possible to use other 1,3,5-triazine phosphates, inclusive of, for example, a mixture of orthophosphates and of pyrophosphates.

Suitable guanidine salts are

| | CAS No. |
|---|---|
| G carbonate | 593-85-1 |
| G cyanurate prim. | 70285-19-7 |
| G phosphate prim. | 5423-22-3 |
| G phosphate sec. | 5423-23-4 |
| G sulfate prim. | 646-34-4 |
| G sulfate sec. | 594-14-9 |
| Guanidine pentaerythritol borate | N.A. |
| Guanidine neopentyl glycol borate | N.A. |
| and also urea phosphate green | 4861-19-2 |
| Urea cyanurate | 57517-11-0 |
| Ammeline | 645-92-1 |
| Ammelide | 645-93-2 |
| Melem | 1502-47-2 |
| Melon | 32518-77-7 |

Compounds E) for the purposes of the present invention are intended to be not only by way of example benzoguanamine itself and its adducts or salts, but also the derivatives substituted on nitrogen and their adducts or salts.

Other suitable compounds E) are ammonium polyphosphate (NH₄PO₃), where n is about 200 to 1000, preferably from 600 to 800, and tris(hydroxyethyl)isocyanurate (THEIC) of the formula IV 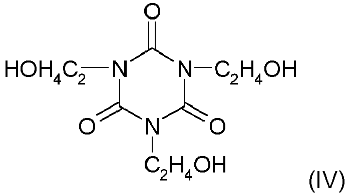 or its reaction products with aromatic carboxylic acids Ar(COOH)ₘ, optionally in mixtures with one another, where Ar is a mono-, bi-, or trinuclear aromatic six-membered ring system, and m is 2, 3, or 4.

Examples of suitable carboxylic acids are phthalic acid, isophthalic acid, terephthalic acid, 1,3,5-benzenetricarboxylic acid, 1,2,4-benzenetricarboxylic acid, pyromellitic acid, mellophanic acid, prehnitic acid, 1-naphthoic acid, 2-naphthoic acid, naphthalenedicarboxylic acids, and anthrace-necarboxylic acids.

They are produced by reacting the tris(hydroxyethyl)isocyanurate with the acids, or with their alkyl esters or their halides in accordance with the processes in EP-A 584 567.

Reaction products of this type are a mixture of monomeric and oligomeric esters which may also have crosslinking. The degree of oligomerization is usually from 2 to about 100, preferably from 2 to 20. Preference is given to the use of THEIC and/or its reaction products in mixtures with phosphorus-containing nitrogen compounds, in particular (NH₄PO₃)ₙ or melamine pyrophosphate or polymeric melamine phosphate. The mixing ratio, for example of (NH₄PO₃)ₙ to THEIC, is preferably 90-50:10-50% by weight, in particular 80-50:50-20% by weight, based on the total amount of component E).

Other suitable compounds are benzoguanamine compounds of the formula V 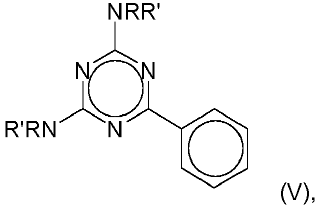 where R and R' are straight-chain or branched alkyl radicals having from 1 to 10 carbon atoms, preferably hydrogen and in particular their adducts with phosphoric acid, boric acid and/or pyrophosphoric acid.

Preference is also given to allantoin compounds of the formula VI 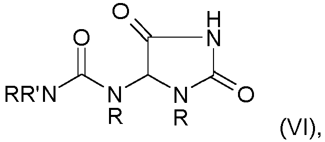 where R and R' are as defined in formula V, and also to the salts of these with phosphoric acid, boric acid and/or pyrophosphoric acid, and also to glycolurils of the formula VII and to their salts with the abovementioned acids. 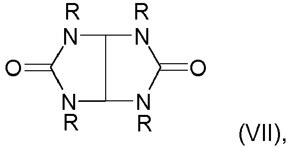 where R is as defined in formula V.

Suitable products are obtainable commercially or in accordance with DE-A 196 14 424.

The cyanoguanidine (formula VIII) which can be used according to the invention is obtained, for example, by reacting calcium cyanamide with carbonic acid, whereupon the cyanamide produced dimerizes at a pH of from 9 to 10 to give cyanoguanidine.

CaNCN + H₂O + CO₂ → H₂N-CN + CaCO₃

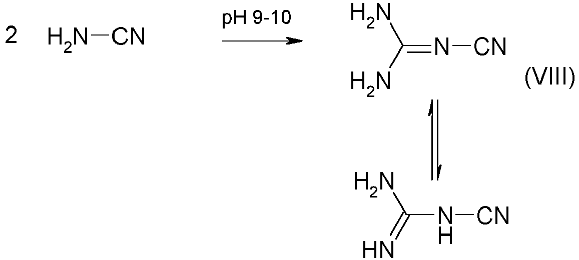

The product obtainable commercially is a white powder with a melting point of from 209°C to 211°C.

It is very particularly preferable in the invention to use melamine cyanurate having the following particle size distribution:
d₉₈ <25 µm, preferably <20 µm,
d₅₀ <4.5 µm, preferably <3 µm.

The person skilled in the art generally understands a d₅₀ value to be the particle size value which is smaller than that of 50% of the particles and larger than that of 50% of the particles.

The particle size distribution is usually determined via laser scattering (by analogy with ISO 13320).

### Component F

The molding compositions of the invention can comprise, as component F), from 0 to 15% by weight, preferably from 0.1 to 15% by weight, in particular from 0.5 to 10% by weight, based on the total weight of the molding composition, of an aromatic phosphate ester having at least one alkyl-substituted phenyl ring.

The melting point of preferred aromatic phosphate esters is preferably from 50 to 150°C, more preferably from 60 to 110° C, measured by means of DSC in accordance with ISO 11357, 1^{st} heating curve at 20 K/minute.

Preferred components F) are composed of: 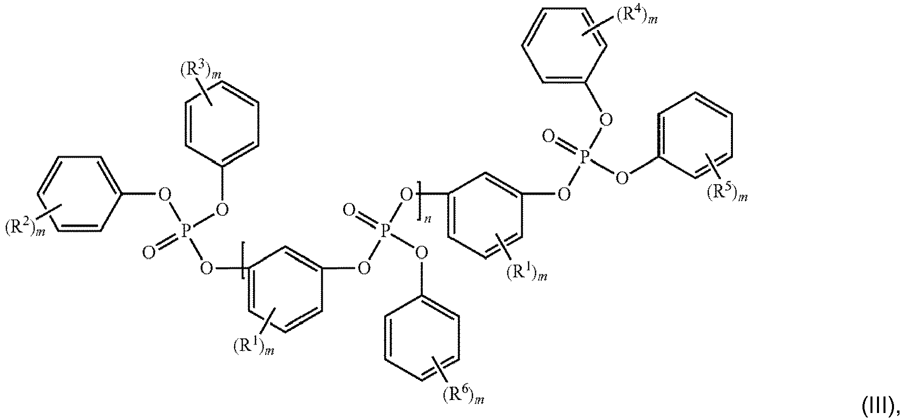 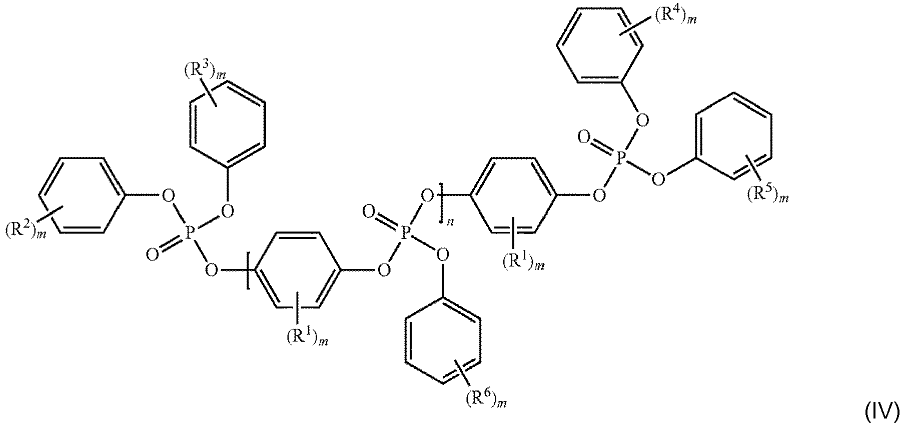 or 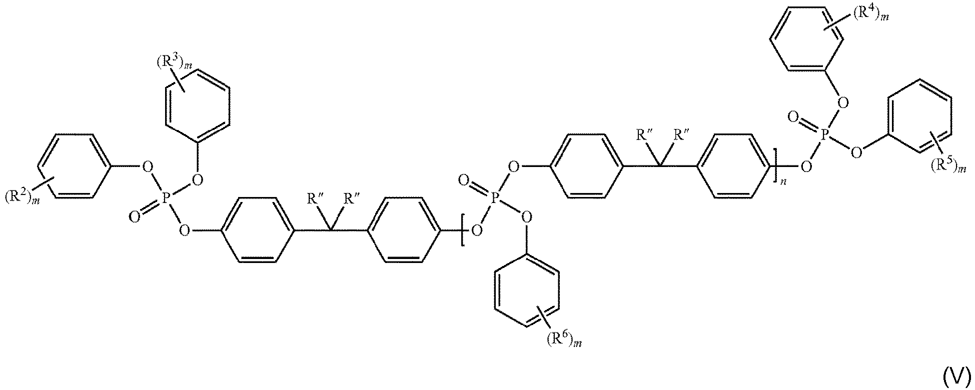
or a mixture of these, where, mutually independently,
R¹ is H, methyl or isopropyl, preferably H,
n is from 0 to 7, preferably 0,
R², R³, R⁴, R⁵ and R⁶
are each independently H, methyl, ethyl or isopropyl, preferably methyl,
m is from 1 to 5, preferably from 1 to 2,
R" is H, methyl, ethyl or cyclopropyl, preferably methyl or hydrogen,
with the proviso that at least one moiety R², R³, R⁴, R⁵ and R⁶ is an alkyl moiety.

It is preferable that the moieties R⁶ and R⁴ are identical, and in particular the moieties R² to R⁶ are identical.

A preferred component F) is:

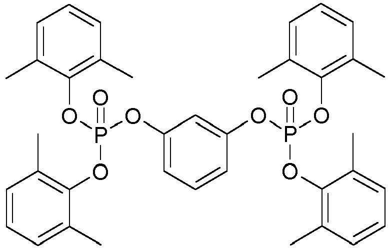

These compounds are available commercially from Daihachi as PX-200^{®}, CAS No. 139189-30-3 or from ICL-IP as Sol-DP^{®}.

### Component H

The molding compositions of the invention can comprise, as component H), from 0 to 50% by weight, in particular up to 40% by weight, based on the total weight of the molding composition, of other additional substances and processing aids.

Additional substances H) usually used are by way of example quantities of up to 40% by weight, preferably up to 15% by weight, based on the total weight of the molding composition, of elastomeric polymers (often also termed impact modifiers, elastomers or rubbers).

Very generally, these are copolymers which are preferably composed of at least two of the following monomers: ethylene, propylene, butadiene, isobutene, isoprene, chloroprene, vinyl acetate, styrene, acrylonitrile, and acrylic or methacrylic esters having from 1 to 18 carbon atoms in the alcohol component.

Polymers of this type are described, e.g. in Houben-Weyl, Methoden der organischen Chemie, vol. 14/1, pages 392-406 (Georg-Thieme-Verlag, Stuttgart, Germany, 1961), and in the monograph by C. B. Bucknall, "Toughened Plastics" (Applied Science Publishers, London, UK, 1977).

Some preferred types of these elastomers are described below.

Preferred types of elastomers are those known as ethylene-propylene (EPM) and ethylene-propylene-diene (EPDM) rubbers.

EPM rubbers generally have practically no residual double bonds, whereas EPDM rubbers may have from 1 to 20 double bonds per 100 carbon atoms.

Examples which may be mentioned of diene monomers for EPDM rubbers are conjugated dienes, such as isoprene and butadiene, non-conjugated dienes having from 5 to 25 carbon atoms, such as 1,4-pentadiene, 1,4-hexadiene, 1,5-hexadiene, 2,5-dimethyl-1,5-hexadiene and 1,4-octadiene, cyclic dienes, such as cyclopentadiene, cyclohexadienes, cyclooctadienes and dicyclopentadiene, and also alkenylnorbornenes, such as 5-ethylidene-2-norbornene, 5-butylidene-2-norbornene, 2-methallyl-5-norbornene and 2-isopropenyl-5-norbornene, and tricyclodienes, such as 3-methyltricyclo[5.2.1.0^{2,6}]-3,8-decadiene, and mixtures of these. Preference is given to 1,5-hexadiene, 5-ethylidenenorbornene and dicyclopentadiene. The diene content of the EPDM rubbers is preferably from 0.5 to 50% by weight, in particular from 1 to 8% by weight, based on the total weight of the rubber.

EPM and EPDM rubbers may preferably also have been grafted with reactive carboxylic acids or with derivatives of these. Examples of these are acrylic acid, methacrylic acid and derivatives thereof, e.g. glycidyl (meth)acrylate, and also maleic anhydride.

Copolymers of ethylene with acrylic acid and/or methacrylic acid and/or with the esters of these acids are another group of preferred rubbers. The rubbers may also comprise dicarboxylic acids, such as maleic acid and fumaric acid, or derivatives of these acids, e.g. esters and anhydrides, and/or monomers comprising epoxy groups. These monomers comprising dicarboxylic acid derivatives or comprising epoxy groups are preferably incorporated into the rubber by adding to the monomer mixture monomers comprising dicarboxylic acid groups and/or epoxy groups and having the general formulae I, II, III or IV below:

R¹C(COOR²)=C(COOR³)R⁴ (I)

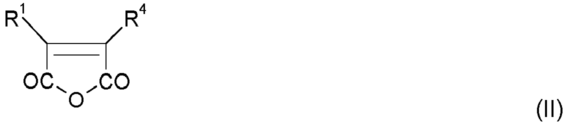

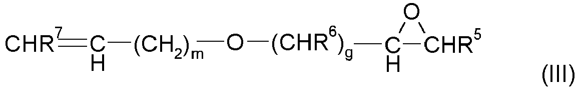

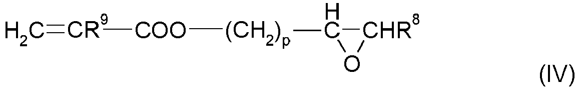

where R¹ to R⁹ are each independently hydrogen or alkyl groups having from 1 to 6 carbon atoms, and m is an integer from 0 to 20, g is an integer from 0 to 10, and p is an integer from 0 to 5.

It is preferable that the moieties R¹ to R⁹ are hydrogen, where m is 0 or 1 and g is 1. The corresponding compounds are maleic acid, fumaric acid, maleic anhydride, allyl glycidyl ether, and vinyl glycidyl ether.

Preferred compounds of the formulae I, II and IV are maleic acid, maleic anhydride and (meth)acrylates comprising epoxy groups, such as glycidyl acrylate and glycidyl methacrylate, and the esters with tertiary alcohols, such as tert-butyl acrylate. Although the latter have no free carboxy groups, their behavior approximates to that of the free acids and they are therefore termed monomers with latent carboxy groups.

The copolymers are advantageously composed of from 50 to 98% by weight of ethylene, from 0.1 to 20% by weight of monomers comprising epoxy groups and/or methacrylic acid and/or monomers comprising anhydride groups, the remaining amount (to 100% by weight) being (meth)acrylates.

Particular preference is given to copolymers of
from 50 to 98% by weight, in particular from 55 to 95% by weight, of ethylene,
from 0.1 to 40% by weight, in particular from 0.3 to 20% by weight, of glycidyl acrylate and/or glycidyl methacrylate, (meth)acrylic acid, and/or maleic anhydride, and
from 1 to 45% by weight, in particular from 10 to 40% by weight, of n-butyl acrylate and/or 2-ethylhexyl acrylate.

Other preferred (meth)acrylates are the methyl, ethyl, propyl, isobutyl and tert-butyl esters.

Comonomers which may also be used alongside these are vinyl esters and vinyl ethers.

The ethylene copolymers described above may be prepared by processes known per se, preferably by random copolymerization at high pressure and elevated temperature. Appropriate processes are well known.

Other preferred elastomers are emulsion polymers whose preparation is described, for example, by Blackley in the monograph "Emulsion Polymerization". The emulsifiers and catalysts which can be used are known per se.

In principle it is possible to use homogeneously structured elastomers or else those with a shell structure. The shell-type structure is determined by the sequence of addition of the individual monomers. The morphology of the polymers is also affected by this sequence of addition. Monomers which may be mentioned here, merely as examples, for the preparation of the rubber fraction of the elastomers are acrylates, such as n-butyl acrylate and 2-ethylhexyl acrylate, corresponding methacrylates, butadiene and isoprene, and also mixtures of these. These monomers may be copolymerized with other monomers, such as styrene, acrylonitrile, vinyl ethers and with other acrylates or methacrylates, such as methyl methacrylate, methyl acrylate, ethyl acrylate or propyl acrylate.

The soft or rubber phase (with glass transition temperature below 0°C) of the elastomers may be the core, the outer envelope or an intermediate shell (in the case of elastomers whose structure has more than two shells). Elastomers having more than one shell may also have more than one shell composed of a rubber phase.

If one or more hard components (with glass transition temperatures above 20°C) are involved, besides the rubber phase, in the structure of the elastomer, these are generally prepared by polymerizing, as principal monomers, styrene, acrylonitrile, methacrylonitrile, α-methylstyrene, p-methylstyrene, or acrylates or methacrylates, such as methyl acrylate, ethyl acrylate or methyl methacrylate. Besides these, it is also possible to use relatively small proportions of other comonomers here.

It has proven advantageous in some cases to use emulsion polymers which have reactive groups at the surface. Examples of groups of this type are epoxy, carboxy, latent carboxy, amino and amide groups, and also functional groups which may be introduced by concomitant use of monomers of the general formula 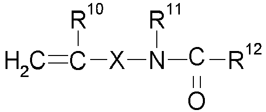 where the substituents may be defined as follows:
R¹⁰ is hydrogen or C₁-C₄-alkyl group,
R¹¹ is hydrogen or C₁-C₅-alkyl group or aryl group, in particular phenyl,
R¹² is hydrogen or C₁-C₁₀-alkyl group, C₆-C₁₂-aryl group or -OR¹³,
R¹³ is C₁-C₅-alkyl group or C₆-C₁₂-aryl group, optionally with substitution by O- or N-comprising groups,
X is a chemical bond, a C₁-C₁₀-alkylene group or C₆-C₁₂-arylene group, or 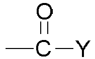
Y is O-Z or NH-Z, and
Z is a C₁-C₁₀-alkylene group or C₆-C₁₂-arylene group.

The graft monomers described in EP-A 208 187 are also suitable for introducing reactive groups at the surface.

Other examples which may be mentioned are acrylamide, methacrylamide and substituted acrylates or methacrylates, such as (N-tert-butylamino)ethyl methacrylate, (N,N-dimethylamino)ethyl acrylate, (N,N-dimethylamino)methyl acrylate and (N,N-diethylamino)ethyl acrylate.

The particles of the rubber phase may also have been crosslinked. Examples of crosslinking monomers are 1,3-butadiene, divinylbenzene, diallyl phthalate and dihydrodicyclopentadienyl acrylate, and also the compounds described in EP-A 50 265.

It is also possible to use the monomers known as graft-linking monomers, i.e. monomers having two or more polymerizable double bonds which react at different rates during the polymerization. Preference is given to the use of compounds of this type in which at least one reactive group polymerizes at about the same rate as the other monomers, while the other reactive group (or reactive groups), for example, polymerize(s) significantly more slowly. The different polymerization rates give rise to a certain proportion of unsaturated double bonds in the rubber. If another phase is then grafted onto a rubber of this type, at least some of the double bonds present in the rubber react with the graft monomers to form chemical bonds, i.e. the phase grafted on has at least some degree of chemical bonding to the graft base.

Examples of graft-linking monomers of this type are monomers comprising allyl groups, in particular allyl esters of ethylenically unsaturated carboxylic acids, for example allyl acrylate, allyl methacrylate, diallyl maleate, diallyl fumarate and diallyl itaconate, and the corresponding monoallyl compounds of these dicarboxylic acids. Besides these there is a wide variety of other suitable graft-linking monomers. For further details reference may be made here, for example, to U.S. Pat. No. 4,148,846.

The proportion of these crosslinking monomers in the impact-modifying polymer is generally up to 5% by weight, preferably not more than 3% by weight, based on the impact-modifying polymer.

Some preferred emulsion polymers are listed below. Mention may first be made here of graft polymers with a core and with at least one outer shell, and having the following structure:

| Type | Monomers for the core | Monomers for the envelope |
|---|---|---|
| I | 1,3-butadiene, isoprene, n-butyl acrylate, ethylhexyl acrylate, or a mixture of these | styrene, acrylonitrile, methyl methacrylate |
| II | as I, but with concomitant use of crosslinking agents | as I |
| III | as I or II | n-butyl acrylate, ethyl acrylate, methyl acrylate, 1,3-butadiene, isoprene, ethylhexyl acrylate |
| IV | as I or II | as I or III, but with concomitant use of monomers having reactive groups, as described herein |
| V | styrene, acrylonitrile, methyl methacrylate, or a mixture of these | first envelope composed of monomers as described under I and II for the core, second envelope as described under I or IV for the envelope |

These graft polymers, in particular ABS polymers and/or ASA polymers, are preferably used in amounts of up to 40% by weight for the impact-modification of PBT optionally in a mixture with up to 40% by weight of polyethylene terephthalate. Blend products of this type are obtainable with the trademark Ultradur^{®}S (previously Ultrablend^{®}S from BASF AG).

Instead of graft polymers whose structure has more than one shell, it is also possible to use homogeneous, i.e. single-shell, elastomers composed of 1,3-butadiene, isoprene and n-butyl acrylate or from copolymers of these. These products, too, may be prepared by concomitant use of crosslinking monomers or of monomers having reactive groups.

Examples of preferred emulsion polymers are n-butyl acrylate-(meth)acrylic acid copolymers, n-butyl acrylate-glycidyl acrylate or n-butyl acrylate-glycidyl methacrylate copolymers, graft polymers with an inner core composed of n-butyl acrylate or based on butadiene and with an outer envelope composed of the abovementioned copolymers, and copolymers of ethylene with comonomers which supply reactive groups.

The elastomers described may also be prepared by other conventional processes, e.g. by suspension polymerization.

Preference is also given to silicone rubbers, as described in DE-A 37 25 576, EP-A 235 690, DE-A 38 00 603 and EP-A 319 290.

It is, of course, also possible to use mixtures of the types of rubber listed above.

Fibrous or particulate fillers H) that may be mentioned are glass fibers, glass beads, amorphous silica, calcium silicate, calcium metasilicate, magnesium carbonate, kaolin, chalk, mica, barium sulfate, feldspar and powdered quartz. Amounts used of fibrous fillers H) are generally up to 50% by weight, in particular up to 35% by weight, and amounts used of particulate fillers are up to 30% by weight, in particular up to 10% by weight based on the total weight of the molding composition.

Preferred fibrous fillers that may be mentioned are aramid fibers and potassium titanate fibers, and particular preference is given here to glass fibers in the form of E glass. These can be used in the form of rovings or chopped glass in the forms commercially available.

Amounts used of highly laser-absorbent fillers, such as carbon fibers, carbon black, graphite, graphene, or carbon nanotubes, are preferably below 1% by weight, particularly preferably below 0.05% by weight based on the total weight of the molding composition.

In order to improve compatibility with the thermoplastic, the fibrous fillers can have been surface-pretreated with a silane compound.

Suitable silane compounds are those of the general formula

(X-(CH₂)ₙ)ₖ-Si-(O-CₘH₂ₘ₊₁)₄₋ₖ

in which the definitions of the substituents are as follows: 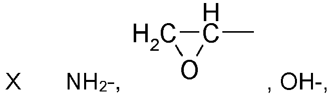
n is a whole number from 2 to 10, preferably from 3 to 4,
m is a whole number from 1 to 5, preferably from 1 to 2,
k is a whole number from 1 to 3, preferably 1.

Preferred silane compounds are aminopropyltrimethoxysilane, aminobutyltrimethoxysilane, aminopropyltriethoxysilane, aminobutyltriethoxysilane, and also the corresponding silanes which comprise a glycidyl group as substituent X.

The amounts generally used of the silane compounds for surface coating are from 0.05 to 5% by weight, preferably from 0.1 to 1.5% by weight, and in particular from 0.2 to 0.5% by weight (based on H).

Acicular mineral fillers are also suitable.

For the purposes of the invention, acicular mineral fillers are mineral fillers with strongly developed acicular character. An example is acicular wollastonite. The mineral preferably has an LID (length to diameter) ratio of from 8:1 to 35:1, preferably from 8:1 to 11:1. The mineral filler may, optionally, have been pretreated with the abovementioned silane compounds, but the pretreatment is not essential.

The thermoplastic molding compositions of the invention can comprise, as component H), the usual processing aids, such as stabilizers, oxidation retarders, agents to counteract decomposition due to heat and decomposition due to ultraviolet light, lubricants and mold-release agents, colorants, such as dyes and pigments, plasticizers, etc.

Examples which may be mentioned of oxidation retarders and heat stabilizers are sterically hindered phenols and/or phosphites, hydroquinones, aromatic secondary amines, such as diphenylamines, various substituted members of these groups, and mixtures of these in concentrations of up to 1 % by weight, based on the weight of the thermoplastic molding compositions.

UV stabilizers which may be mentioned, and are generally used in amounts of up to 2% by weight, based on the molding composition, are various substituted resorcinols, salicylates, benzotriazoles, and benzophenones.

Colorants that can be added are inorganic and organic pigments, and also dyes, for example nigrosin and anthraquinones. EP 1 722 984 A, EP 1 353 986 A, or DE 10054859 A1 by way of example mention particularly suitable colorants.

Preference is further given to esters or amides of saturated or unsaturated aliphatic carboxylic acids having from 10 to 40, preferably from 16 to 22, carbon atoms with saturated aliphatic alcohols or amines which comprise from 2 to 40, preferably from 2 to 6, carbon atoms.

The carboxylic acids can be mono- or dibasic. Examples which may be mentioned are pelar-gonic acid, palmitic acid, lauric acid, margaric acid, dodecanedioic acid, behenic acid, and particularly preferably stearic acid, capric acid, and also montanic acid (a mixture of fatty acids having from 30 to 40 carbon atoms).

The aliphatic alcohols can be mono- to tetrahydric. Examples of alcohols are n-butanol, n-octanol, stearyl alcohol, ethylene glycol, propylene glycol, neopentyl glycol, and pentaerythritol, preference being given to glycerol and pentaerythritol.

The aliphatic amines can be mono- to trifunctional. Examples of these are stearylamine, ethylenediamine, propylenediamine, hexamethylenediamine, and di(6-aminohexyl)amine, particular preference being given here to ethylenediamine and hexamethylenediamine. Preferred esters or amides are correspondingly glycerol distearate, glycerol tristearate, ethylenediamine distearate, glycerol monopalmitate, glycerol trilaurate, glycerol monobehenate, and pentaerythritol tetrastearate.

It is also possible to use mixtures of various esters or amides, or esters with amides in combination, in any desired mixing ratio.

Suitable lubricants and mold-release agents are for example long-chain fatty acids (e.g. stearic acid or behenic acid), salts of these (e.g. Ca stearate or Zn stearate), or montan waxes (mixtures of straight-chain, saturated carboxylic acids having chain lengths of from 28 to 32 carbon atoms), Ca montanate or Na montanate, and also low-molecular-weight polyethylene waxes and low-molecular-weight polypropylene waxes.

Examples of plasticizers are dioctyl phthalate, dibenzyl phthalate, butyl benzyl phthalate, hydrocarbon oils.

The molding compositions of the invention can also comprise from 0 to 2% by weight, based on the total weight of the molding composition, of fluorine-containing ethylene polymers. These are polymers of ethylene having from 55 to 76% by weight fluorine content, preferably from 70 to 76% by weight, based on the total weight of the fluorine-containing ethylene polymers.

Examples of these are polytetrafluoroethylene (PTFE), tetrafluoroethylene-hexafluoropropylene copolymers and tetrafluoroethylene copolymers with relatively small proportions (generally up to 50% by weight) of copolymerizable ethylenically unsaturated monomers. These are described, for example, by Schildknecht in "Vinyl and Related Polymers", Wiley-Verlag, 1952, pages 484-494 and by Wall in "Fluoropolymers" (Wiley Interscience, 1972).

These fluorine-comprising ethylene polymers have homogeneous distribution in the molding compositions and preferably have a particle size d₅₀ (numeric average) in the range from 0.05 to 10 µm, in particular from 0.1 to 5 µm. These small particle sizes can particularly preferably be achieved by the use of aqueous dispersions of fluorine-containing ethylene polymers and the incorporation of these into a polyester melt.

### Preparation of the inventive thermoplastic molding compositions

The inventive thermoplastic molding compositions may be prepared by methods known per se, by mixing the starting components in conventional mixing apparatus, such as screw extruders, Brabender mixers or Banbury mixers, and then extruding them. The extrudate may then be cooled and comminuted. It is also possible to premix individual components (in a drum or otherwise, of individual components to the pellets), and then to add the remaining starting materials individually and/or likewise in a mixture. The mixing temperatures are generally from 230 to 290°C.

In another preferred mode of operation, the respective components can be mixed with a polyester prepolymer, compounded and pelletized. The resultant pellets are then condensed in the solid phase under inert gas, continuously or batchwise, at a temperature below the melting point of component A) until the desired viscosity has been reached.

The molding compositions of the invention feature good mechanical and flame-retardancy properties. It has been found by the inventors of the present invention that polar modified polyolefin waxes prepared by means of metallocene catalysts have a positive impact on the fire behavior, especially for thin-walled parts. Further, the processing especially in extrusion, is improved, i.e. no or reduced deposits of additives during processing, especially no or reduced die drool.

The moldings produced from the molding compositions of the invention are used for the production of internal and external parts, preferably with load-bearing or mechanical function in any of the following sectors: electrical, furniture, sports, mechanical engineering, sanitary and hygiene, medical, power engineering and drive technology, automobile and other means of transport, or housing material for equipment and apparatuses for telecommunications, consumer electronics, household devices, mechanical engineering, the heating sector, or fastening parts for installation work, or for containers and ventilation parts of any type.

These materials are suitable for the production of fibers, foils, and moldings of any type, in particular for applications as plugs, switches, housing parts, housing covers, headlamp bezels, shower heads, fittings, smoothing irons, rotary switches, stove controls, fryer lids, door handles, (rear) mirror housings, (tailgate) screen wipers, sheathing for optical conductors, loose buffer tubes for monofilaments for braided sleeving FOC (fiber optic cable) applications and monofilaments for braided sleeving.

The present invention therefore further relates to a method for the production of fibers, films and moldings comprising the use of a polyester molding composition according to the present invention, and a fiber, film, or molding obtained from the polyester molding composition according to the present invention.

Preferably, the thermoplastic molding compositions are thin-walled parts with a preferred wall thickness of at most 0.4 mm. Preferred thin-walled parts are selected from fibers, foils and moldings as mentioned above.

Devices which can be produced with the polyesters of the invention in the electrical and electronics sector are: plugs, plug parts, plug connectors, cable harness components, circuit mounts, circuit mount components, three-dimensionally injection-molded circuit mounts, electrical connector elements, mechatronic components, and optoelectronic components.

Possible uses in automobile interiors are for dashboards, steering-column switches, seat parts, headrests, center consoles, gearbox components, and door modules, and possible uses in automobile exteriors are for door handles, headlamp components, exterior mirror components, windshield wiper components, windshield wiper protective housings, decorative grilles, roof rails, sunroof frames, and exterior bodywork parts.

Possible uses of the polyesters in the kitchen and household sector are: production of components for kitchen equipment, e.g. fryers, smoothing irons, buttons, and also garden and leisure sector applications, such as components for irrigation systems or garden equipment.

The present invention further relates to the use of a polyolefin wax prepared by means of metallocene catalysts, where the polyolefin wax is a homopolymer of ethylene, a copolymer of ethylene with one or more 1-olefins which may be linear or branched, substituted or unsubstituted and having 3 to 18 carbon atoms or a homopolymer of propylene, which is polar modified by reacting the polyolefin wax with an α,β-unsaturated carboxylic acid or a derivative thereof for an improvement of the flame retardancy of thermoplastic molding compositions comprising a thermoplastic polyester. Suitable polyolefin waxes, suitable thermoplastic polyesters and suitable thermoplastic molding compositions are mentioned above.

The invention is further illustrated by the following examples.

### Examples

### Components of the molding compositions / production of the molding compositions / test specimen

### Component A:

Polybutylene terephthalate with intrinsic viscosity IV 130 ml/g and carboxy end group content 34 meq/kg (Ultradur^{®} B 4520 from BASF SE) (IV measured in 0.5% by weight solution of phenol/o-dichlorobenzene, 1:1 mixture, at 25°C in accordance with DIN 53728 and ISO 1628).

### Component B:

Poly-(ε)-caprolactone (Capa^{®} 6500 from Ingevity Corp.): M_{w} (GPC, hexafluoroisopropanol/0.05% of potassium trifluoroacetate, PMMA standard): 99 300 g/mol with intrinsic viscosity IV 226 ml/g (IV measured in 0.5% by weight solution of phenol/o-dichlorobenzene, 1:1 mixture, at 25° C. in accordance with DIN 53728 and ISO 1628). Melting range (DSC, 20 K/min in accordance with DIN 11357): from 58 to 60°C.

### Component C:

Copolyester: polybutylene adipate-co-terephthalate, melting point (DSC, 20 K/min in accordance with DIN 11357): from 100 to 120°C. Ecoflex^{®} F blend C1200 from BASF SE.

### Component D/1:

Al diethylphosphinate (Exolit^{®} OP 1230 from Clariant GmbH).

### Component F/1:

Aromatic phosphate ester. Melting range (DSC, 20 K/min in accordance with DIN 11357): from 92 to 100°C. PX-200 from Daihachi Chemical Industry Co.

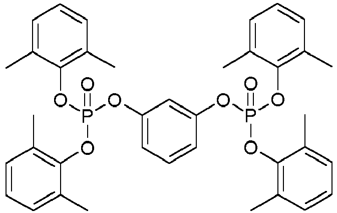

### Component F/2:

Aromatic phosphate ester. Melting range (DSC, 20 K/min in accordance with DIN 11357): from 102 to 110°C. Fyrolflex^{®} SOL-DP from ICL-IP Europe.

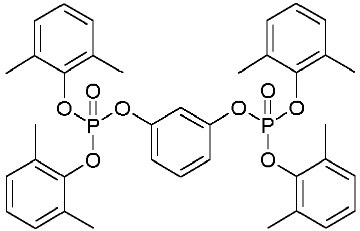

### Component H/1:

PTFE powder. Dyneon TF2071 PPFE from 3M from Dyneon GmbH. The TDS particle size is 500 µm (ISO 12086) and density is 2.16 g/cm³ (ISO 12086).

### Component G:

Maleic anhydride grafted metallocene polyethylene wax. Licocene^{®} PE MA 4221 fine grain from Clariant GmbH.

### Component H/2:

Stabilizer. Irgafos^{®} 168 from BASF SE.

### Production of the molding compositions

The molding compositions for the inventive and comparative examples in Table 1 were produced by means of a ZE25 twin-screw extruder. The temperature profile was kept constant, increasing from 240°C in zone 1 to 260°C (zones 2 to 9). Rotation rate was set at 130 rpm, resulting in throughput of about 7.5 to 9.6 kg/h, depending on formulation. The extrudate was drawn through a water bath and pelletized. The pellets were then processed by injection molding.

### Testing of properties

The test specimens for the tests listed in table 1 were injection-molded in an Arburg 420C injection molding machine at a melt temperature of about 270°C and at a mold temperature of about 80°C. The test specimens for the stress tests were produced in accordance with ISO 527-2:/1993, and the test specimens for the impact resistance tests were produced in accordance with ISO 179-2/1 eA.

The MVR tests were carried out in accordance with ISO1133.

The flame retardancy of the molding compositions was determined firstly by the UL 94 V method (Underwriters Laboratories Inc. Standard of Safety, "Test for Flammability of Plastic Materials for Parts in Devices and Appliances", p. 14 to p. 18, Northbrook 1998).

Glow - wire resistance GWFI (glow - wire flammability index) was tested in accordance with DIN EN 60695-2-12 on plaques. The GWFI test is a general suitability test for plastics in contact with parts that carry an electrical potential. The temperature determined is the highest at which one of the following conditions is met in three successive tests: (a) no ignition of the specimen or (b) afterflame time or afterglow time 30 s after end of exposure to the glow wire, and no ignition of the underlay.

The sum of the contents of components A) to H) in Table 1 (comparative examples = V1 to V4, inventive example = E1) add to 100% by weight. The compositions of the moldings and the results of the measurements are summarized in Table 1:

**Table 1**

| Components (wt%) / Testing method | V1 | V2 | V3 | V4 | E1 |
|---|---|---|---|---|---|
| A | 69.3 | 68.3 | 67.3 | 66.3 | 69.3 |
| B | 4 | 4 | 4 | 4 | 4 |
| C | 4 | 4 | 4 | 4 | 4 |
| D/1 | 20 | 21 | 22 | 23 | 20 |
| F/1 | 1 | 1 | 1 | 1 | 1 |
| F/2 | 1 | 1 | 1 | 1 | 1 |
| H/1 | 0.4 | 0.4 | 0.4 | 0.4 | 0.4 |
| G | - | - | - | - | 0.1 |
| H/2 | 0.3 | 0.3 | 0.3 | 0.3 | 0.3 |
| | | | | | |
| VZ¹⁾ /[mL/g] | 125 | 126 | 125 | 125 | 126 |
| MVR²⁾ 275/2.16 /[ccm/10 min] | 31.9 | 30.9 | 28.8 | 28.9 | 33.0 |
| Tensile modulus of elasticity /[MPa] | 2069 | 2079 | 2094 | 2100 | 2082 |
| Tensile strength at break /[MPa] | 27.9 | 27.3 | 26.8 | 26.0 | 28.0 |
| Tensile strain at break /[%] | 22.5 | 20.1 | 19.5 | 18.1 | 21.2 |
| Charpy unnotched /KJ/m² | 38 | 34 | 35 | 32 | 34 |
| Charpy unnotched at -30°C/KJ/m² | 32 | 33 | 31 | 28 | 32 |
| Charpy notched /KJ/m² | 3.2 | 2.9 | 3.0 | 2.7 | 3.2 |
| UL94 (0.4 mm) | V-2 | V-2 | V-2 | V-2 | V-0 |
| UL94 (0.8 mm) | V-0 | V-0 | V-0 | V-0 | V-0 |
| GWFI 960°C / 0.75 mm | passed | passed | passed | passed | passed |
| GWIT 775°C / 0.75 mm | passed | passed | passed | passed | passed |
| GWFI 960°C / 1.5 mm | passed | passed | passed | passed | passed |
| Deposits at nozzle during pipe extrusion | heavy | heavy | heavy | heavy | none |

| | | | | | |
|---|---|---|---|---|---|
| ¹⁾ Viscosity number in accordance with IS0307 ²⁾ Melt viscosity rate in accordance with ISO1133 | | | | | |

It is clear from the data in Table 1 that the inventive polyester molding composition E1 shows an improved fire behavior especially at thin-walled parts (UL94-test at 0.4 mm). The amount of component G used has a higher impact on the UL94 fire behavior than the increase of the flame retardant D/1 (V2 to V4). Further, the inventive molding composition shows a significantly improved processing behavior in extrusion applications (no deposits at the nozzle).

## Claims

1. A thermoplastic molding composition comprising
A) from 10 to 99.6% by weight of a thermoplastic polyester differing from C);
B) from 0.1 to 30% by weight of a poly(ε-caprolactone);
C) from 0.1 to 30% by weight of a biodegradable polyester differing from B);
D) from 0.1 to 30% by weight of a phosphinic salt;
E) from 0 to 20% by weight of a nitrogen-containing flame retardant;
F) from 0 to 15% by weight of an aromatic phosphate ester having at least one alkyl-substituted phenyl ring;
G) from 0.05 to 1% by weight of a polyolefin wax prepared by means of metallocene catalysts, where the polyolefin wax is a homopolymer of ethylene, a copolymer of ethylene with one or more 1-olefins which may be linear or branched, substituted or unsubstituted and having 3-18 carbon atoms or a homopolymer of propylene, which is polar modified by reacting the polyolefin wax with an α,β-unsaturated carboxylic acid or a derivative thereof;
H) from 0 to 50% by weight of further additional substances,
where the sum of the percentages by weight of components A) to H) is 100%.

2. The thermoplastic molding composition according to claim 1, wherein component G) is a homopolymer of ethylene or a copolymer of ethylene with one or more 1-olefins which may be linear or branched, substituted or unsubstituted and having 3 to 18 carbon atoms, which is polar modified by reacting the polyolefin wax with maleic anhydride.

3. The thermoplastic molding composition according to claim 1 or 2, wherein the thermoplastic polyester A) is based on aromatic dicarboxylic acids and on aliphatic and/or aromatic dihydroxy compounds, preferably polyethylene terephthalate, polypropylene terephthalate, polybutylene terephthalate or mixtures of these, wherein polyethylene terephthalate and/or polybutylene terephthalate may comprise up to 1% by weight, preferably up to 0.75% by weight, of 1,6-hexanediol and/or 2-methyl-1,5-pentanediol as further monomer units.

4. The thermoplastic molding composition according to any one of claims 1 to 3, wherein component C) is composed of
C1) from 30 to 70 mol%, based on C1) and C2), of an aliphatic dicarboxylic acid or mixture thereof,
C2) from 30 to 70 mol%, based on C1) and C2), of an aromatic dicarboxylic acid or mixture thereof,
C3) from 98.5 to 100 mol%, based on C1) and C2), of 1,4-butanediol or 1,3-propanediol or a mixture of these,
C4) from 0.05 to 1.5% by weight, based on C1) to C3), of a chain extender;
preferably, component C) is polybutylene adipate terephthalate (PBAT) or polybutylene sebacate terephthalate (PBSeT).

5. The thermoplastic molding composition according to any one of claims 1 to 3, wherein component D) is composed of phosphinic salts of the formula (I) or/and diphosphinic salts of the formula (II) or of polymers of these 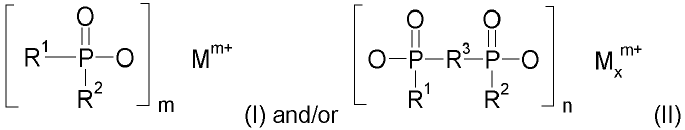 wherein
R¹ and R², being identical or different, are hydrogen or, in linear or branched form, C₁-C₆-alkyl, and/or aryl, or 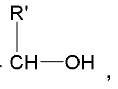 wherein R' is hydrogen, phenyl or tolyl;
R³ is, in linear or branched form, C₁-C₁₀-alkylene or C₆-C₁₀-arylene, C₁-C₁₀-alkyl-C₆-C₁₀arylene or C₆-C₁₀-aryl C₁-C₁₀alkylene;
M is Mg, Ca, Al, Sb, Sn, Ge, Ti, Zn, Fe, Zr, Ce, Bi, Sr, Mn, Li, Na, K and/or a protonated nitrogen base;
m is from 1 to 4; n is from 1 to 4; x is from 1 to 4.

6. The thermoplastic molding composition according to claim 5, wherein R¹ and R² of component D) are mutually independently hydrogen, methyl or ethyl.

7. The thermoplastic molding composition according to any one of claims 1 to 6, wherein component E) is a reaction product of melamine (formula I) and cyanuric acid or isocyanuric acid (formulae la and lb)

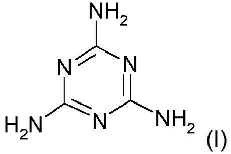

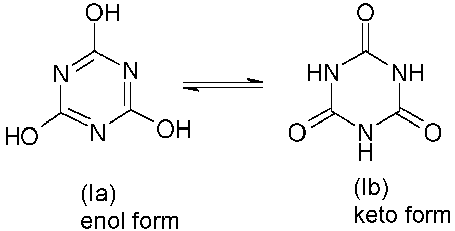

8. The thermoplastic molding composition according to any one of claims 1 to 7, wherein the melting point of component F), measured by means of DSC in accordance with ISO 11357, 1st heating curve at 20 K/minute, is from 50 to 150°C.

9. The thermoplastic molding composition according to any one of claims 1 to 8, wherein component F) is composed of 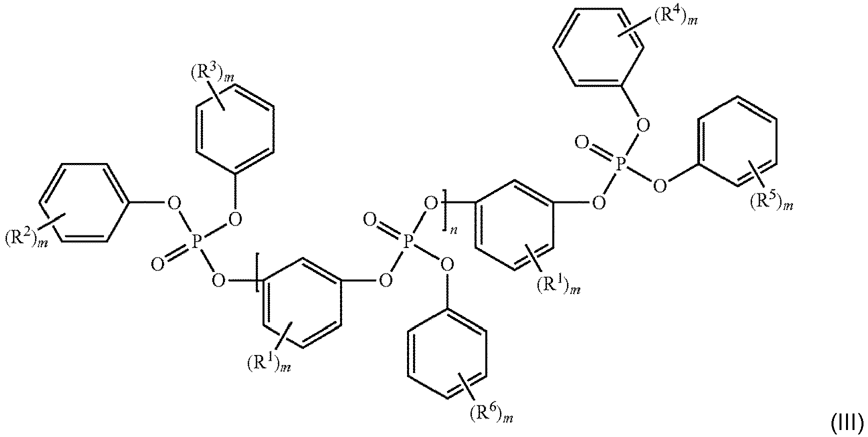 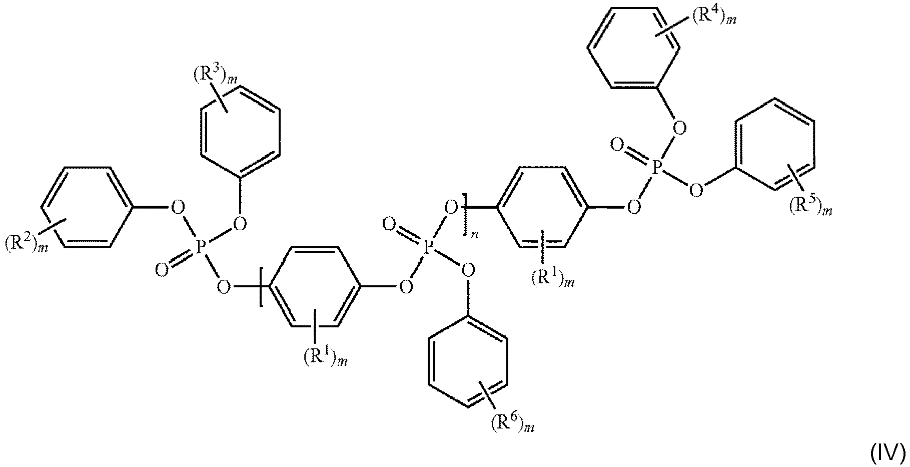 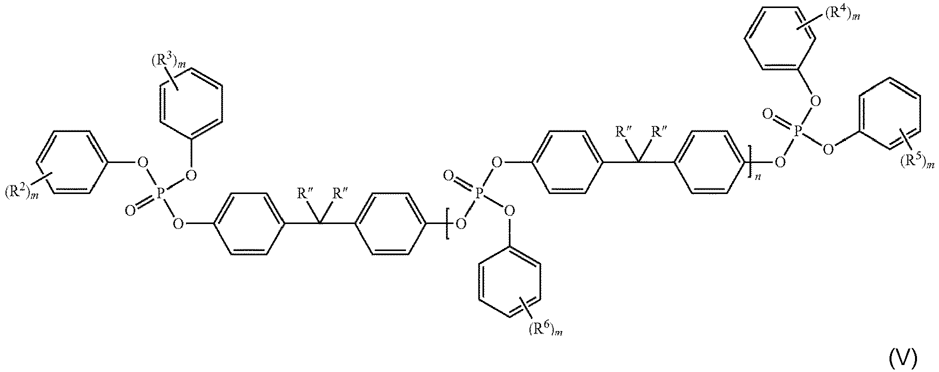 or a mixture of these, where, mutually independently,
R¹ is H, methyl or isopropyl
n is from 0 to 7
R², R³, R⁴, R⁵ and R⁶
each independently represents H, methyl, ethyl or isopropyl
m is from 1 to 5
R" is H, methyl, ethyl or cyclopropyl,
with the proviso that at least one moiety R², R³, R⁴, R⁵ or R⁶ is an alkyl moiety.

10. The thermoplastic molding composition according to claim 9, wherein the substituents of the general formula III, IV and V are:
R¹ hydrogen and/or
R², R³, R⁴, R⁵ and R⁶ methyl and/or
m is 1 or 2.

11. The thermoplastic molding composition according to claim 10, in which component F) is composed of

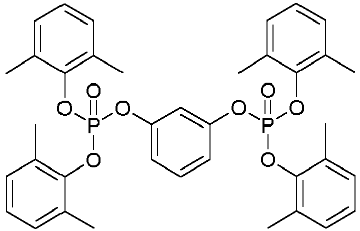

12. A method for the production of fibers, films and moldings comprising the use of a polyester molding composition according to any one of claims 1 to 11.

13. A fiber, film, or molding obtained from the polyester molding composition according to any one of claims 1 to 11.

14. Use of a polyolefin wax prepared by means of metallocene catalysts, where the polyolefin wax is a homopolymer of ethylene, a copolymer of ethylene with one or more 1-olefins which may be linear or branched, substituted or unsubstituted and having 3 to 18 carbon atoms or a homopolymer of propylene, which is polar modified by reacting the polyolefin wax with an α,β-unsaturated carboxylic acid or a derivative thereof for an improvement of the flame retardancy of thermoplastic molding compositions comprising a thermoplastic polyester.

15. The use according to claim 14, wherein the thermoplastic molding compositions are thin-walled parts with a wall thickness of at most 0.4 mm.

## Patentansprüche

1. Thermoplastische Formmasse, enthaltend
A) 10 bis 99,6 Gew.-% eines thermoplastischen Polyesters, der von C) verschieden ist;
B) 0,1 bis 30 Gew.-% eines Poly(ε-caprolactons);
C) 0,1 bis 30 Gew.-% eines biologisch abbaubaren Polyesters, der von B) verschieden ist;
D) 0,1 bis 30 Gew.-% eines Phosphinsäuresalzes;
E) 0 bis 20 Gew.-% eines stickstoffhaltigen Flammschutzmittels;
F) 0 bis 15 Gew.-% eines aromatischen Phosphatesters mit mindestens einem alkylsubstituierten Phenylring;
G) 0,05 bis 1 Gew.-% eines mittels Metallocen-Katalysatoren hergestellten Polyolefinwachses, wobei es sich bei dem Polyolefinwachs um ein Homopolymer von Ethylen, ein Copolymer von Ethylen mit einem oder mehreren linearen oder verzweigten, substituierten oder unsubstituierten 1-Olefinen mit 3-18 Kohlenstoffatomen oder ein Homopolymer von Propylen, das durch Umsetzen des Polyolefinwachses mit einer α,β-ungesättigten Carbonsäure oder einem Derivat davon polar modifiziert ist, handelt;
H) 0 bis 50 Gew.-% weiterer Zusatzstoffe,
wobei die Summe der Gewichtsprozente der Komponenten A) bis H) 100 % ergibt.

2. Thermoplastische Formmasse nach Anspruch 1, wobei es sich bei Komponente G) um ein Homopolymer von Ethylen oder ein Copolymer von Ethylen mit einem oder mehreren linearen oder verzweigten, substituierten oder unsubstituierten 1-Olefinen mit 3-18 Kohlenstoffatomen, das durch Umsetzen des Polyolefinwachses mit Maleinsäureanhydrid polar modifiziert worden ist, handelt.

3. Thermoplastische Formmasse nach Anspruch 1 oder 2, wobei der thermoplastische Polyester A) auf aromatischen Dicarbonsäuren und auf aliphatischen und/oder aromatischen Dihydroxyverbindungen, vorzugsweise Polyethylenterephthalat, Polypropylenterephthalat, Polybutylenterephthalat oder Mischungen davon, basiert, wobei Polyethylenterephthalat und/oder Polybutylenterephthalat bis zu 1 Gew.-%, vorzugsweise bis zu 0,75 Gew.-%, 1,6-Hexandiol und/oder 2-Methyl-1,5-pentandiol als weitere Monomereinheiten enthalten können.

4. Thermoplastische Formmasse nach einem der Ansprüche 1 bis 3, wobei Komponente C) aufgebaut ist aus
C1) 30 bis 70 Mol-%, bezogen auf C1) und C2), einer aliphatischen Dicarbonsäure oder einer Mischung davon,
C2) 30 bis 70 Mol-%, bezogen auf C1) und C2), einer aromatischen Dicarbonsäure oder einer Mischung davon,
C3) 98,5 bis 100 Mol-%, bezogen auf C1) und C2), 1,4-Butandiol oder 1,3-propandiol oder einer Mischung davon,
C4) 0,05 bis 1,5 Gew.-%, bezogen auf C1) bis C3), eines Kettenverlängerers;
wobei es sich bei Komponente C) vorzugsweise um Polybutylenadipatterephthalat(PBAT) oder Polybutylensebacatterephthalat (PBSeT) handelt.

5. Thermoplastische Formmasse nach einem der Ansprüche 1 bis 3, wobei Komponente D) aufgebaut ist aus Phosphinsäuresalzen der Formel (I) und/oder Diphosphinsäuresalzen der Formel (II) oder Polymeren davon 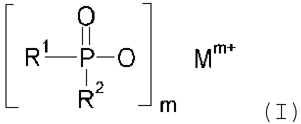 und/oder 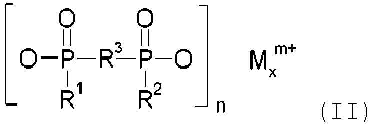 wobei
R¹ und R² gleich oder verschieden sind und für Wasserstoff oder lineares oder verzweigtes C₁-C₆-Alkyl und/oder Aryl oder 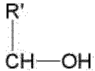 stehen, wobei R' für Wasserstoff, Phenyl oder Tolyl steht;
R³ für lineares oder verzweigtes C₁-C₁₀-Alkylen oder C₆-C₁₀-Arylen, C₁-C₁₀-Alkyl-C₆-C₁₀-arylen oder C₆-C₁₀-Aryl-C₁-C₁₀-alkylen steht;
M für Mg, Ca, Al, Sb, Sn, Ge, Ti, Zn, Fe, Zr, Ce, Bi, Sr, Mn, Li, Na, K und/oder eine protonierte Stickstoffbase steht;
m für 1 bis 4 steht; n für 1 bis 4 steht; x für 1 bis 4 steht.

6. Thermoplastische Formmasse nach Anspruch 5, wobei R¹ und R² der Komponente D) unabhängig voneinander für Wasserstoff, Methyl oder Ethyl stehen.

7. Thermoplastische Formmasse nach einem der Ansprüche 1 bis 6, wobei es sich bei Komponente E) um ein Reaktionsprodukt von Melamin (Formel 1) und Cyanursäure oder Isocyanursäure (Formeln Ia und Ib) handelt:

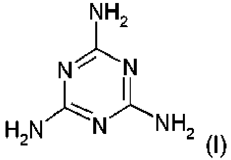

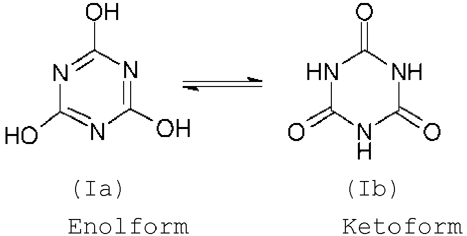

8. Thermoplastische Formmasse nach einem der Ansprüche 1 bis 7, wobei die Komponente F) einen Schmelzpunkt, gemessen mittels DSC gemäß ISO 11357, 1. Aufheizkurve mit 20 K/Minute, von 50 bis 150 °C aufweist.

9. Thermoplastische Formmasse nach einem der Ansprüche 1 bis 8, wobei Komponente F) aufgebaut ist aus 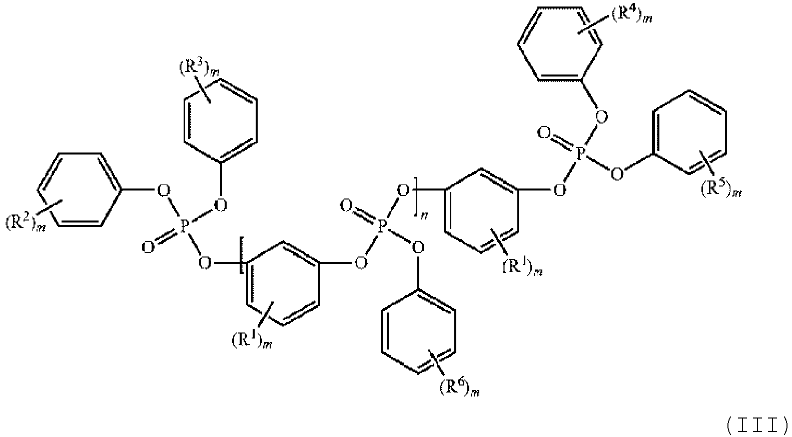 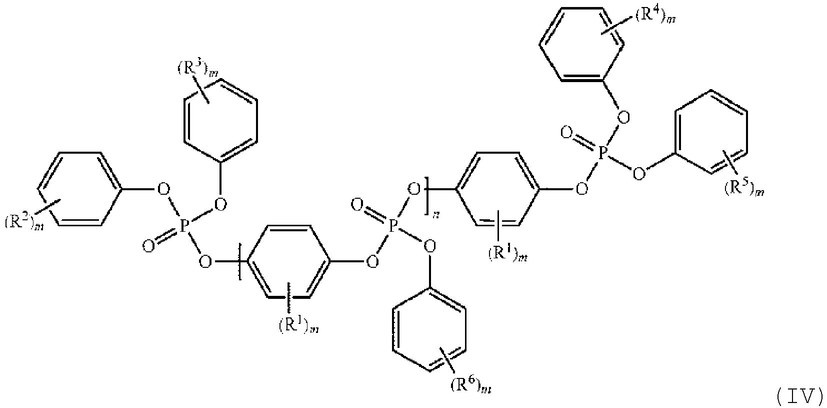 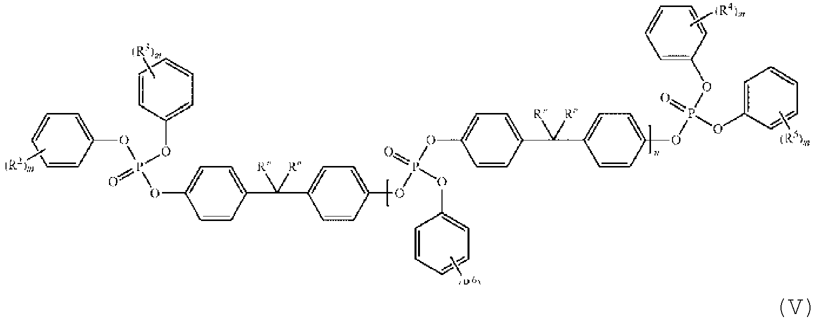 oder einer Mischung davon,
wobei unabhängig voneinander
R¹ für H, Methyl oder Isopropyl steht,
n für 0 bis 7 steht,
R², R³, R⁴, R⁵ und R⁶
jeweils unabhängig für H, Methyl, Ethyl oder Isopropyl stehen,
m für 1 bis 5 steht,
R" für H, Methyl, Ethyl oder Cyclopropyl steht,
mit der Maßgabe, dass mindestens ein Rest R², R³, R⁴, R⁵ oder R⁶ ein Alkylrest ist.

10. Thermoplastische Formmasse nach Anspruch 9, wobei die Substituenten der allgemeinen Formel III, IV und V bedeuten:
R¹ Wasserstoff und/oder
R², R³, R⁴, R⁵ und R⁶ Methyl und/oder
m 1 oder 2.

11. Thermoplastische Formmasse nach Anspruch 10, wobei Komponente F) aufgebaut ist aus

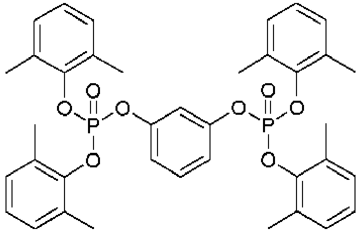

12. Verfahren zur Herstellung von Fasern, Filmen und Formkörpern, bei dem man eine Polyesterformmasse nach einem der Ansprüche 1 bis 11 verwendet.

13. Faser, Folie oder Formkörper, erhalten aus der Polyesterformmasse nach einem der Ansprüche 1 bis 11.

14. Verwendung eines mittels Metallocen-Katalysatoren hergestellten Polyolefinwachses, wobei es sich bei dem Polyolefinwachs um ein Homopolymer von Ethylen, ein Copolymer von Ethylen mit einem oder mehreren linearen oder verzweigten, substituierten oder unsubstituierten 1-Olefinen mit 3 bis 18 Kohlenstoffatomen oder ein Homopolymer von Propylen, das durch Umsetzen des Polyolefinwachses mit einer α,β-ungesättigten Carbonsäure oder einem Derivat davon polar modifiziert ist, handelt, zur Verbesserung der Flammwidrigkeit von thermoplastischen Formmassen, die einen thermoplastischen Polyester enthalten.

15. Verwendung nach Anspruch 14, wobei es sich bei den thermoplastischen Formmassen um dünnwandige Teile mit einer Wandstärke von höchstens 0,4 mm handelt.

## Revendications

1. Composition de moulage thermoplastique, comprenant
A) de 10 à 99,6 % en poids d'un polyester thermoplastique différent de C) ;
B) de 0,1 à 30 % en poids d'une poly(ε-caprolactone) ;
C) de 0,1 à 30 % en poids d'un polyester biodégradable différent de B) ;
D) de 0,1 à 30 % en poids d'un sel phosphinique ;
E) de 0 à 20 % en poids d'un agent ignifuge contenant de l'azote ;
F) de 0 à 15 % en poids d'un ester de phosphate aromatique ayant au moins un cycle phényle substitué par alkyle ;
G) de 0,05 à 1 % en poids d'une cire de polyoléfine préparée au moyen de catalyseurs métallocènes, où la cire de polyoléfine est un homopolymère d'éthylène, un copolymère d'éthylène avec une ou plusieurs 1-oléfines qui peuvent être linéaires ou ramifiées, substituées ou non substituées et ayant 3 à 18 atomes de carbone ou un homopolymère de propylène, qui est modifié de façon polaire par réaction de la cire de polyoléfine avec un acide carboxylique α,β-insaturé ou un dérivé de celui-ci ;
H) de 0 à 50 % en poids d'autres substances supplémentaires,
où la somme des pourcentages en poids des composants A) à H) est de 100 %.

2. Composition de moulage thermoplastique selon la revendication 1, dans laquelle le composant G) est un homopolymère d'éthylène ou un copolymère de éthylène avec une ou plusieurs 1-oléfines qui peuvent être linéaires ou ramifiées, substituées ou non substituées et ayant 3 à 18 atomes de carbone, qui est modifié de façon polaire par réaction de la cire de polyoléfine avec l'anhydride maléique.

3. Composition de moulage thermoplastique selon la revendication 1 ou 2, dans laquelle le polyester thermoplastique A) est à base d'acides dicarboxyliques aromatiques et de composés dihydroxy aliphatiques et/ou aromatiques, de préférence le poly(téréphtalate d'éthylène), le poly(téréphtalate de propylène), le poly(téréphtalate de butylène) ou des mélanges de ceux-ci, dans laquelle le poly(téréphtalate d'éthylène) et/ou le poly(téréphtalate de butylène) peut comprendre jusqu'à 1 % en poids, de préférence jusqu'à 0,75 % en poids, de 1,6-hexanediol et/ou 2-méthyl-1,5-pentanediol en tant que motifs monomères supplémentaires.

4. Composition de moulage thermoplastique selon l'une des revendications 1 à 3, dans laquelle le composant C) est composé de
C1) de 30 à 70 % en moles, par rapport à C1) et C2), d'un acide dicarboxylique aliphatique ou un mélange de ceux-ci,
C2) de 30 à 70 % en moles, par rapport à C1) et C2), d'un acide dicarboxylique aromatique ou un mélange de ceux-ci,
C3) de 98,5 à 100 % en moles, par rapport à C1) et C2), de 1,4-butanediol ou de 1,3-propanediol ou un mélange de ceux-ci,
C4) de 0,05 à 1,5 % en poids, par rapport à C1) à C3), d'un extenseur de chaîne ;
de préférence, le composant C) est le poly(adipate-téréphtalate de butylène) (PBAT) ou le poly(sébacate-téréphtalate de butylène) (PBSeT).

5. Composition de moulage thermoplastique selon l'une quelconque des revendications 1 à 3, dans laquelle le composant D) est composé de sels phosphiniques de formule (I) ou/et de sels diphosphiniques de formule (II) ou des polymères de ceux-ci 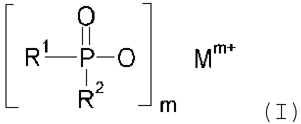 et/ou 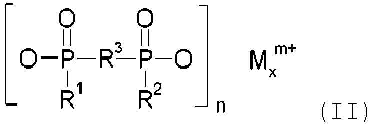 dans laquelle
R¹ et R², étant identiques ou différents, sont hydrogène ou, sous forme linéaire ou ramifiée, alkyle en C₁-C₆, et/ou aryle, ou 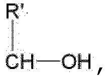 où R' est hydrogène, phényle ou tolyle ;
R³ est, sous forme linéaire ou ramifiée, alkylène en C₁-C₁₀ ou arylène en C₆-C₁₀, (alkyle en C₁-C₁₀)-(arylène en C₆-C₁₀) ou (aryle en C₆-C₁₀) - (alkylène en C₁-C₁₀) ;
M est Mg, Ca, Al, Sb, Sn, Ge, Ti, Zn, Fe, Zr, Ce, Bi, Sr, Mn, Li, Na, K et/ou une base azotée protonée ;
m est de 1 à 4 ; n est de 1 à 4 ; x est de 1 à 4.

6. Composition de moulage thermoplastique selon la revendication 5, dans laquelle R¹ et R² du composant D) sont mutuellement indépendamment hydrogène, méthyle ou éthyle.

7. Composition de moulage thermoplastique selon l'une quelconque des revendications 1 à 6, dans laquelle le composant E) est un produit de réaction de mélamine (formule I) et d'acide cyanurique ou d'acide isocyanurique (formules la et Ib)

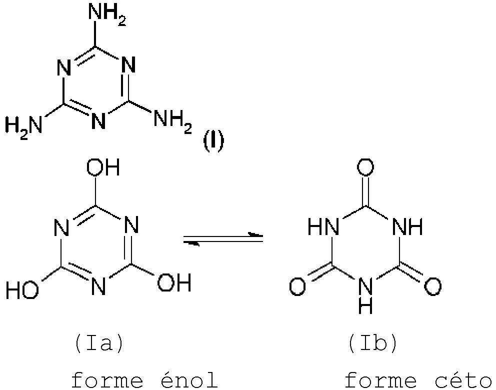

8. Composition de moulage thermoplastique selon l'une quelconque des revendications 1 à 7, dans laquelle le point de fusion du composant F), mesuré au moyen d'une DSC selon ISO 11357, 1re courbe de chauffage à 20 K/minute, est de 50 à 150 °C.

9. Composition de moulage thermoplastique selon l'une quelconque des revendications 1 à 8, dans laquelle le composant F) est composé de 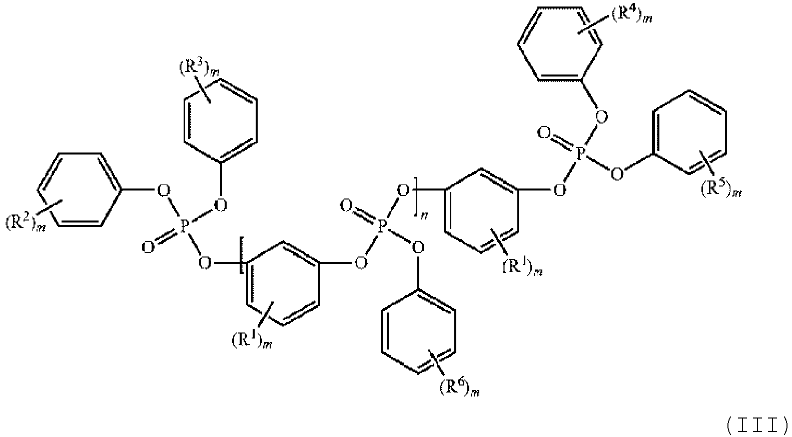 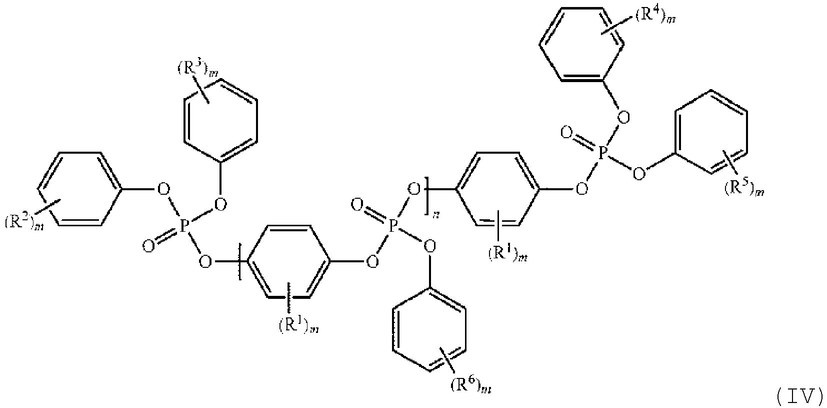 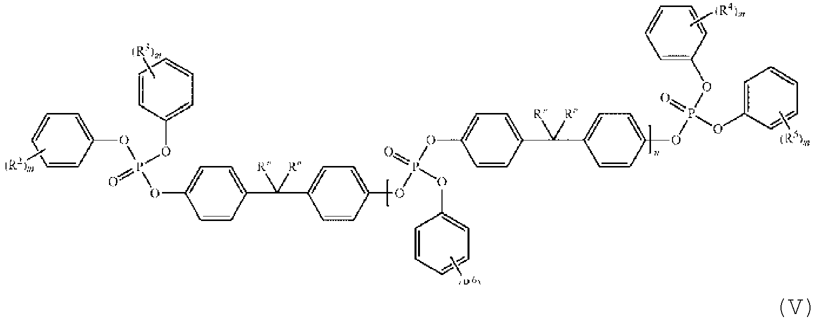
ou un mélange de ceux-ci,
où, mutuellement indépendamment,
R¹ est H, méthyle ou isopropyle
n est de 0 à 7
R², R³, R⁴, R⁵ et R⁶
représentent chacun indépendamment H, méthyle, éthyle ou isopropyle
m est de 1 à 5
R" est H, méthyle, éthyle ou cyclopropyle,
à condition qu'au moins un fragment R², R³, R⁴, R⁵ ou R⁶ soit un fragment alkyle.

10. Composition de moulage thermoplastique selon la revendication 9, dans laquelle les substituants de formule générale III, IV et V sont :
R¹ hydrogène et/ou
R², R³, R⁴, R⁵ et R⁶ méthyle et/ou
m est 1 ou 2.

11. Composition de moulage thermoplastique selon la revendication 10, dans laquelle le composant F) est composé de

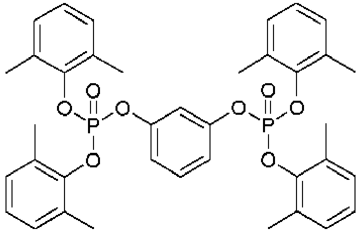

12. Procédé de production de fibres, de films et de moulages comprenant l'utilisation d'une composition de moulage de polyester selon l'une quelconque des revendications 1 à 11.

13. Fibre, film ou moulage obtenu à partir de la composition de moulage de polyester selon l'une quelconque des revendications 1 à 11.

14. Utilisation d'une cire de polyoléfine préparée au moyen de catalyseurs métallocènes, où la cire de polyoléfine est un homopolymère d'éthylène, un copolymère d'éthylène avec une ou plusieurs 1-oléfines qui peuvent être linéaires ou ramifiées, substituées ou non substituées et ayant 3 à 18 atomes de carbone ou un homopolymère de propylène, qui est modifié de façon polaire par réaction de la cire de polyoléfine avec un acide carboxylique α,β-insaturé ou un dérivé de celui-ci pour une amélioration du caractère ignifuge de compositions de moulage thermoplastiques comprenant un polyester thermoplastique.

15. Utilisation selon la revendication 14, dans laquelle les compositions de moulage thermoplastiques sont des pièces à paroi mince avec une épaisseur de paroi d'au plus 0,4 mm.
